# EUROPEAN PATENT SPECIFICATION

(11) **EP 3 525 396 B1**
(45) Date of publication and mention of the grant of the patent: **16.09.2020**
(21) Application number: 17867436.2
(22) Date of filing: 24.10.2017
(51) Int. Cl.: H04L 12/24, H04L 12/46, H04W 16/02

(54) **METHOD AND DEVICE FOR MANAGING NETWORK SLICE INSTANCE**
VERFAHREN UND VORRICHTUNG ZUR VERWALTUNG VON NETZWERKSCHICHTINSTANZEN
PROCÉDÉ ET DISPOSITIF DE GESTION D'INSTANCE DE TRANCHE DE RÉSEAU

(30) Priority: 03.11.2016 CN 201610959009
(43) Date of publication of application: 14.08.2019
(73) Proprietor: Huawei Technologies Co., Ltd., Longgang District Shenzhen, Guangdong 518129 (CN)
(72) Inventor: SUN, Wenqi, Shenzhen Guangdong 518129 (CN); LU, Wei, Shenzhen Guangdong 518129 (CN); YANG, Shuigen, Shenzhen Guangdong 518129 (CN)
(74) Representative: Pfenning, Meinig & Partner mbB
(86) International application number: PCT/CN2017/107496
(87) International publication number: WO 2018/082477

(56) References cited:
- WO-A1-2015/197025
- WO-A1-2016/150511
- CN-A- 104 253 866
- CN-A- 105 812 171
- CN-A- 105 812 171
- HUAWEI: "Adding management use case of Network Slices with Common and Slice Specific Functions", 3GPP DRAFT; S5-164111 PCR TR 28.801 ADDING MANAGEMENT USE CASE OF NETWORK SLICES WITH COMMON AND SLICE SPECIFIC FUNCTIONS, 3RD GENERATION PARTNERSHIP PROJECT (3GPP), MOBILE COMPETENCE CENTRE ; 650, RO , vol. SA WG5, no. Harbin (China); 20160711 - 20160715 10 July 2016 (2016-07-10), XP051118760, Retrieved from the Internet: URL:http://www.3gpp.org/ftp/Meetings_3GPP_ SYNC/SA5/Docs/ [retrieved on 2016-07-10]
- ZTE CORPORATION: "IFA022 Multi-Site Network Slicing Use case", ETSI DRAFT; NFVIFA(16)000767R7, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. WG - NFV IFA - Interfaces and Architecture 12 September 2016 (2016-09-12), pages 1-14, XP014278690, Retrieved from the Internet: URL:https://docbox.etsi.org/ISG [retrieved on 2016-09-12]
- "3rd Generation Partnership Project; Technical Specification Group Services and System Aspects; Telecommunication management; Study on management and orchestration of network slicing for next generation network (Release 14)", 3GPP STANDARD; 3GPP TR 28.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V0.2.0, 20 September 2016 (2016-09-20), pages 1-19, XP051172497, [retrieved on 2016-09-20]

## Description

### TECHNICAL FIELD

Embodiments of this application relate to the communications field, and more specifically, to a method and an apparatus for managing a network slice instance in the communications field.

### BACKGROUND

With rapid development of mobile communications, digitalized transformation has swept through almost all conventional industries. However, a conventional cellular network architecture can provide only uniform network services, and has a difficulty in meeting extremely differentiated communication requirements caused by the digitalized transformation tide, including a functionality difference and a performance difference.

In a next-generation mobile network, a communications network is further abstracted into a network slice (network slicing) based on a logic function. The network slice is a combination of logical network functions supporting a communication service requirement of a particular case. For example, in a 5th Generation (the 5th generation, 5G) network, an enhanced mobile broadband (enhanced mobile broadband, eMBB) network slice, a massive machine type communication (massive machine type communication, mMTC) network slice, an ultra reliable machine type communication (ultra reliable machine type communication, uMTC) network slice, and the like may be customized based on a service requirement. An entire 5G system may include a large quantity of network slice instances meeting different connection capabilities. One of basic capabilities of the 5G network is that an all-in-one network platform supports different functions and QoS connection communication services by using dynamic and secure network slice instances.

However, an existing network management solution does not support management of a network slice instance. Managing a network slice instance, especially updating a network slice instance, is a problem that urgently needs to be resolved.

CN 105 812 171 A discloses a virtualized network function VNF control method and device. The method comprises the following steps: a VNF example storage which directly communicates with a VNFM is established, and VNFR of VNF examples is stored in the VNF example storage; when the VNFM needs to conduct operation on the VNF examples, no NFVO coordination is needed; or in the absence of an NFVO, the VNFR of the VNF examples in the VNF example storage is controlled directly; or by creating a communication interface between the VNFM and the VNF example storage, operation can be conducted on the VNF examples by the VNFM without NFVO coordination; or in the absence of the NFVO, the VNFR in the VNF example storage can be controlled directly via the communication interface between the VNFM and the VNF example storage, that is to say the VNFR of the VNF examples which need to be controlled can be obtained from the VNF example storage or the VNFR recorded in the VNF example storage can be directly modified, VNF example control efficiency is effectively improved, and resources consumed in VNF example control processes can be reduced.

HUAWEI in "Adding management use case of Network Slices with Common and Slice Specific Functions", vol. SA WG5, no. Harbin (China); 20160711 - 20160715 , (20160710), 3GPP DRAFT; S5-164111, describes that a network slice update may only be implemented if network slice instances sharing a common network function are not affected.

ZTE CORPORATION in "IFA022 Multi-Site Network Slicing Use case", vol. WG - NFV IFA - Interfaces and Architecture, (20160912), pages 1 - 14, ETSI DRAFT; describes how a Network Slice Orchestrator maps requested Network Slices to appropriate Network services. The NSO orchestrates network slices using resources from a NFV site.

### SUMMARY

Embodiments of this application provide a method and an apparatus for managing a network slice instance.

According to a first aspect, a method for managing a network slice instance is provided according to independent claim 1.

The first network device receives the update request message sent by the transmit end, determines, based on the update request message, that the first network function of the first network slice instance needs to be updated to the second network function, sends the first configuration request message to the second network device to request the second network device to configure the second network function, then receives the configuration response message sent by the second network device, and sends the update response message to the transmit end, to indicate that the update has been completed. Therefore, according to the method for managing a network slice instance provided in this embodiment of this application, a network function for providing a service for a network slice instance can be modified and upgraded, thereby updating the network slice instance, and improving user experience.

It should be understood that, the transmit end may be an operator, a third-party customer, a service related application, or any entity that possibly sends a request to an NSM&O within service provider domain. This is not limited in this embodiment of this application.

It should be understood that, when the first network function is a shared network function, there may alternatively be other different implementations. For example, if the first network function is allowed to be updated for the at least one second network slice instance, the NSM&O may directly return an update response message to the transmit end, to indicate an update failure. Alternatively, when the first network function is not allowed to be updated for all second network slice instances sharing the first network function, an update response message is returned to the transmit end, to indicate an update failure. This is not limited in this embodiment of this application.

With reference to the foregoing possible implementation of the first aspect, in a second possible implementation of the first aspect, before the sending, by the first network device, a first configuration request message to a second network device based on the update request message, the method further includes: sending, by the first network device, a modification request message to at least one of the second network device, a third network device, and a fourth network device when a third network function dependent on the first network function exists in the first network slice instance, where the modification request message is used to request to modify the third network function.

It should be understood that, dependency may exist between network functions. After a network function is updated, whether configuration modification needs to be correspondingly performed on another network function on which the network function is dependent needs to be determined. Specifically, in this embodiment of this application, the NSM&O may first determine whether a third network function dependent on the first network function exists in the first network slice instance. If the third network function exists, the NSM&O may modify the third network function, thereby avoiding impact of the update of the first network function on the third network function.

With reference to the foregoing possible implementation of the first aspect, in a third possible implementation of the first aspect, before the sending, by the first network device, a modification request message to at least one of the second network device, a third network device, and a fourth network device, the method further includes: determining, by the first network device when the third network function is a shared network function, at least one third network slice instance sharing the third network function. The sending, by the first network device, a modification request message to at least one of the second network device, a third network device, and a fourth network device includes: sending, by the first network device, the modification request message to at least one of the second network device, the third network device, and the fourth network device when the third network function is allowed to be modified for all of the at least one third network slice instance.

Specifically, if the third network function is a shared network function, before modifying the third network function, the NSM&O may first determine whether the third network function is allowed to be modified for the at least one third network slice instance sharing the third network function, and then modify the third network function when the modification is allowed for all third network slice instances. It should be understood that, whether the third network function needs to be modified may be determined based on an actual situation. This is not limited in this embodiment of this application.

With reference to the foregoing possible implementations of the first aspect, in a fourth possible implementation of the first aspect, before the sending, by the first network device, a first configuration request message to a second network device based on the update request message, the method further includes: sending, by the first network device, a creation request message to the third network device when no available second network function exists and the second network function is a virtualized network function, where the creation request message is used to request to create the second network function, and the creation request message carries a parameter of the second network function; and receiving, by the first network device, a first response message sent by the third network device based on the creation request message, where the first response message is used to indicate that the second network function has been created. The sending, by the first network device, a first configuration request message to a second network device based on the update request message includes: sending, by the first network device, the first configuration request message to the second network device based on the first response message.

Specifically, after receiving the update request message sent by the transmit end, the NSM&O may first determine whether an available second network function exists. If a second network function meeting a requirement exists, the NSM&O may directly send the first configuration request message to an EM, to request the EM to configure the second network function for the first network slice instance. If no second network function meeting a requirement exists, two cases need to be considered: If the second network function is a physical network function, the NSM&O may also directly send the first configuration request message to the EM, to directly configure the second network function. If the second network function is a virtualized network function, the NSM&O determines that the second network function needs to be created.

With reference to the foregoing possible implementation of the first aspect, in a fifth possible implementation of the first aspect, before the receiving, by the first network device, a first response message sent by the third network device based on the creation request message, the method further includes: receiving, by the first network device, a second response message sent by the third network device based on the creation request message, where the second response message is used to indicate that the second network function is allowed to be created; sending, by the first network device, a resource request message to the fourth network device based on the second response message, where the resource request message is used to request to allocate a resource to the second network function; receiving, by the first network device, a third response message sent by the fourth network device based on the resource request message, where the third response message is used to indicate that the resource has been allocated to the second network function; and sending, by the first network device, a first notification message to the third network device, where the first notification message is used to inform that the resource has been allocated to the second network function. The receiving, by the first network device, a first response message sent by the third network device based on the creation request message includes: receiving, by the first network device, the first response message sent by the third network device based on the first notification message.

With reference to the foregoing possible implementations of the first aspect, in a sixth possible implementation of the first aspect, after the first network device updates the first network function to the second network function, the method further includes: deleting, by the first network device, the first network function for the first network slice instance.

With reference to the foregoing possible implementation of the first aspect, in a seventh possible implementation of the first aspect, the deleting, by the first network device, the first network function for the first network slice instance includes: sending, by the first network device, a third configuration request message to at least one of the second network device, the third network device, and the fourth network device if the first network function is a shared network function, and the first network function is not allowed to be updated for at least one second network slice instance sharing the first network function, where the third configuration request message is used to request to configure that the first network function no longer provides a service for a network slice instance for which the first network function is allowed to be updated; or sending, by the first network device, a fourth configuration request message to at least one of the second network device, the third network device, and the fourth network device if the first network function is a virtualized network function and the first network function is generated by a fifth network device, where the fourth configuration request message is used to request to configure that the first network function no longer provides a service for a network slice instance for which the first network function is allowed to be updated.

With reference to the foregoing possible implementation of the first aspect, in an eighth possible implementation of the first aspect, the deleting, by the first network device, the first network function for the first network slice instance includes: if the first network function is a virtualized network function, the first network function is a shared network function, the first network function is allowed to be updated for all second network slice instances sharing the first network function, and the first network function is not generated by the NM, sending, by the first network device, a first termination request message to the second network device, where the first termination request message is used to request to terminate management of the first network function; receiving, by the first network device, a first termination acknowledgment message sent by the second network device based on the first termination request message; sending, by the first network device, a second termination request message to the third network device based on the first termination acknowledgment message, where the second termination request message is used to request to terminate the first network function; and receiving, by the first network device, a second termination acknowledgment message sent by the third network device based on the second termination request message.

With reference to the foregoing possible implementation of the first aspect, in a ninth possible implementation of the first aspect, after the receiving, by the first network device, a second termination acknowledgment message sent by the third network device based on the second termination request message, the method further includes: sending, by the first network device, a third termination request message to the fourth network device based on the second termination acknowledgment message, where the third termination request message is used to request to delete a network resource and a network connection related to the first network function; and receiving, by the first network device, a third termination acknowledgment message sent by the fourth network device based on the third termination request message.

With reference to the foregoing possible implementations of the first aspect, in a tenth possible implementation of the first aspect, before the sending, by the first network device, a first configuration request message to a second network device based on the update request message, the method further includes: sending, by the first network device, a reservation request message to the second network device or the fourth network device based on the update request message, where the reservation request message is used to request to reserve a resource for the second network function; and receiving, by the first network device, a reservation response message sent by the second network device or the fourth network device based on the reservation request message, where the reservation response message is used to indicate whether the resource has been successfully reserved for the second network function. The sending, by the first network device, a first configuration request message to a second network device based on the update request message includes: sending, by the first network device, the first configuration request message to the second network device based on the update request message when the reservation response message indicates that the resource has been successfully reserved for the second network function.

Specifically, before requesting the EM to configure the second network function, the NSM&O may first reserve a network resource, that is, request the EM or a VIM to reserve a resource for the second network function. If the second network function is a physical network function, the NSM&O may send the reservation request message to the EM, to request the EM to reserve a physical resource. If the second network function is a virtualized network function, the NSM&O may send the reservation request message to the VIM, to request the VIM to reserve a virtual resource. After the NSM&O receives the reservation response message sent by the EM or the VIM, if the reservation response message indicates that the resource has been successfully reserved, the NSM&O may send the first configuration request message to the EM, or if the reservation response message indicates a resource reservation failure, the NSM&O may directly send the update response message to the transmit end, where the update response message is used to indicate a network function update failure, and the update response message may further indicate a reason for the update failure, for example, insufficient resources.

Optionally, before the NSM&O sends the reservation request message to the EM or the VIM, the NSM&O may first send a query request to the EM, a VNFM, and the VIM, to query a running status of a network function and a network resource occupation status, and determine, based on a query result, whether to reserve a resource. This is not limited in this embodiment of this application.

With reference to the foregoing possible implementations of the first aspect, in an eleventh possible implementation of the first aspect, before the sending, by the first network device, a first configuration request message to a second network device based on the update request message, the method further includes: sending, by the first network device, a first query request message to a storage device, where the first query request message is used to query validity of the update request message, and the first query request message carries an identifier of the transmit end; and receiving, by the first network device, a first query response message sent by the storage device based on the first query request message, where the first query response message is used to indicate whether the update request message is valid. The sending, by the first network device, a first configuration request message to a second network device based on the update request message includes: sending, by the first network device, the first configuration request message to the second network device when the update request message is valid.

Specifically, when a network slice instance is created or during user initialization, the storage device stores subscription information related to a user and a correspondence between the network slice instance and the user. Therefore, before receiving the update request message sent by the transmit end, the NSM&O may first send the first query request message to the storage device, to query whether the update request message is valid, and then send the first configuration request message to the EM when the update request message is valid. In this way, an unauthorized user can be prevented from maliciously updating a network slice instance, and security of managing a network slice instance can be improved.

With reference to the foregoing possible implementations of the first aspect, in a twelfth possible implementation of the first aspect, after the receiving, by the first network device, a configuration response message sent by the second network device based on the first configuration request message, the method further includes: sending, by the first network device, an update notification message to the storage device, where the update notification message carries updated information of the first network slice instance; and receiving, by the first network device, a storage success message sent by the storage device based on the update notification message.

With reference to the foregoing possible implementations of the first aspect, in a thirteenth possible implementation of the first aspect, before the sending, by the first network device, a first configuration request message to a second network device based on the update request message, the method further includes: sending, by a first network device, a second notification message to the fifth network device, where the second notification message is used to inform that the second network function is to be configured; and receiving, by the first network device, a third response message sent by the fifth network device based on the second notification message.

Specifically, for a management architecture including the NM, both the NSM&O and the NM can manage a physical network function and a virtualized network function. Therefore, to avoid a configuration conflict, the NSM&O and the NM need to coordinate. The NSM&O may send the second notification message to the NM to inform of a to-be-configured network function, and perform configuration after receiving the third response message fed back by the NM.

With reference to the foregoing possible implementations of the first aspect, in a fourteenth possible implementation of the first aspect, before the sending, by a first network device, a second notification message to the third network device, the method further includes: sending, by the first network device, a second query request message to the fifth network device, where the second query request message is used to request to query an existing virtualized network function; and receiving, by the first network device, a second query response message sent by the fifth network device based on the second query request message, where the second query response message is used to feed back configuration information of the existing virtualized network function. The sending, by a first network device, a second notification message to the fifth network device includes: sending, by the first network device, the second notification message to the fifth network device based on the second query response message.

Specifically, the NSM&O may query the NM for a network function generated by the NM, where the network function is mainly a virtualized network function. This is because a physical network function may be directly managed by the NSM&O, but some configurations of a virtualized network function may be stored only in the NM and the NFVO does not store all configurations. Therefore, the NSM&O needs to query the NM for an existing network function, and performs configuration based on a feedback of the NM, thereby avoiding conflicting with the NM.

With reference to the foregoing possible implementations of the first aspect, in a fifteenth possible implementation of the first aspect, after the receiving, by the first network device, a configuration response message sent by the second network device based on the first configuration request message, the method further includes: sending, by the first network device, network function configuration information to the fifth network device, where the network function configuration information carries a configuration parameter of the second network function.

According to a second aspect, another method for managing a network slice instance is provided. The method includes: receiving, by a second network device, a first configuration request message sent by a first network device, where the first configuration request message is used to request to configure the second network function for the first network slice instance; configuring, by the second network device, the second network function based on the first configuration request message; and sending, by the second network device, a configuration response message to the first network device, where the configuration response message is used to indicate that the second network function has been configured.

In a first possible implementation of the second aspect, before the receiving, by a second network device, a first configuration request message sent by a first network device, the method further includes: receiving, by the second network device, a reservation request message sent by the first network device, where the reservation request message is used to request the second network device to reserve a resource for the second network function; reserving, by the second network device, a resource for the second network function based on the reservation request message; and sending, by the second network device, a reservation response message to the first network device, where the reservation response message is used to indicate that the resource has been successfully reserved for the second network device.

With reference to the foregoing possible implementation of the second aspect, in a second possible implementation of the second aspect, after the sending, by the second network device, a configuration response message to the first network device, the method further includes: if a first network function is a shared network function and the first network function is allowed to be updated for all second network slice instances sharing the first network function, receiving, by the second network device, a first termination request message sent by the first network device, where the first termination request message is used to request to terminate management of the first network function; deleting, by the second network device, a management object of the first network function based on the first termination request message; and sending, by the second network device, a first termination acknowledgment message to the first network device.

With reference to the foregoing possible implementation of the second aspect, in a third possible implementation of the second aspect, the method further includes: when a third network function dependent on the first network function exists in the first network slice instance, receiving, by the second network device, a modification request message sent by the first network device, where the modification request message is used to request to modify the third network function; and modifying, by the second network device, the third network function based on the modification request message.

According to a third aspect, another method for managing a network slice instance is provided. The method includes: receiving, by a third network device, a creation request message sent by a first network device, where the creation request message is used to request to create a second network function, and the creation request message carries a parameter of the second network function; creating, by the third network device, the second network function based on the creation request message; and sending, by the third network device, a first response message to the first network device, where the first response message is used to indicate that the second network function has been created.

In a first possible implementation of the third aspect, the creating, by the third network device, the second network function based on the creation request message includes: sending, by the third network device, a second response message to the first network device based on the creation request message, where the second response message is used to indicate that the second network function is allowed to be created; receiving, by the third network device, a first notification message sent by the first network device, where the first notification message is used to inform that a resource has been allocated to the second network function; and configuring, by the third network device, the second network function based on the first notification message.

With reference to the foregoing possible implementation of the third aspect, in a second possible implementation of the third aspect, after the sending, by the third network device, a first response message to the first network device, the method further includes: if a first network function is a virtualized network function, the first network function is a shared network function, and the first network function is not allowed to be updated for at least one second network slice instance sharing the first network function, receiving, by the third network device, a third configuration request message sent by the first network device, where the third configuration request message is used to request to configure that the first network function no longer provides a service for a network slice instance for which the first network function is allowed to be updated; and configuring, by the third network device, the first network function based on the third configuration request message.

With reference to the foregoing possible implementation of the third aspect, in a third possible implementation of the third aspect, the method further includes: receiving, by the third network device, a second termination request message sent by the first network device, where the second termination request message is used to request to terminate the first network function; terminating, by the third network device, the first network function based on the second termination request message; and sending, by the third network device, a second termination acknowledgment message to the first network device.

According to a fourth aspect, another method for managing a network slice instance is provided. The method includes: receiving, by a fifth network device, a second notification message sent by a first network device, where the second notification message is used to inform that a second network function of a first network slice instance is to be configured; determining, by the fifth network device based on the second notification message, that the first network device is allowed to configure the first network function; and sending, by the fifth network device, a third response message to the first network device.

In a first possible implementation of the fourth aspect, before the receiving, by a fifth network device, a second notification message sent by a first network device, the method further includes: receiving, by the fifth network device, a second query request message sent by the first network device, where the second query request message is used to request to query an existing virtualized network function; and sending, by the fifth network device, a second query response message to the first network device based on the second query request message, where the second query response message is used to feed back configuration information of the existing virtualized network function. The receiving, by a fifth network device, a second notification message sent by a first network device includes: receiving, by the fifth network device, the second notification message sent by the first network device based on the second query response message.

With reference to the foregoing possible implementation of the fourth aspect, in a second possible implementation of the fourth aspect, after the sending, by the fifth network device, a third response message to the first network device, the method further includes: receiving, by the fifth network device, network function configuration information sent by the first network device, where the network function configuration information carries a configuration parameter of the second network function.

According to a fifth aspect, an apparatus for managing a network slice instance is provided. The apparatus is configured to perform the method according to the first aspect or any possible implementation of the first aspect. Specifically, the apparatus includes units configured to perform the method according to the first aspect or any possible implementation of the first aspect.

According to a sixth aspect, another apparatus for managing a network slice instance is provided. The apparatus is configured to perform the method according to the second aspect or any possible implementation of the second aspect. Specifically, the apparatus includes units configured to perform the method according to the second aspect or any possible implementation of the second aspect.

According to a seventh aspect, another apparatus for managing a network slice instance is provided. The apparatus is configured to perform the method according to the third aspect or any possible implementation of the third aspect. Specifically, the apparatus includes units configured to perform the method according to the third aspect or any possible implementation of the third aspect.

According to an eighth aspect, another apparatus for managing a network slice instance is provided. The apparatus is configured to perform the method according to the fourth aspect or any possible implementation of the fourth aspect. Specifically, the apparatus includes units configured to perform the method according to the fourth aspect or any possible implementation of the fourth aspect.

According to a ninth aspect, an apparatus for managing a network slice instance is provided. The apparatus includes a transceiver, a memory, a processor, and a bus system. The transceiver, the memory, and the processor are connected to each other by using the bus system. The memory is configured to store an instruction. The processor is configured to execute the instruction stored in the memory to control the transceiver to receive a signal and/or send a signal. In addition, when the processor executes the instruction stored in the memory, the execution causes the processor to perform the method according to the first aspect or any possible implementation of the first aspect.

According to a tenth aspect, an apparatus for managing a network slice instance is provided. The apparatus includes a transceiver, a memory, a processor, and a bus system. The transceiver, the memory, and the processor are connected to each other by using the bus system. The memory is configured to store an instruction. The processor is configured to execute the instruction stored in the memory to control the transceiver to receive a signal and/or send a signal. In addition, when the processor executes the instruction stored in the memory, the execution causes the processor to perform the method according to the second aspect or any possible implementation of the second aspect.

According to an eleventh aspect, an apparatus for managing a network slice instance is provided. The apparatus includes a transceiver, a memory, a processor, and a bus system. The transceiver, the memory, and the processor are connected to each other by using the bus system. The memory is configured to store an instruction. The processor is configured to execute the instruction stored in the memory to control the transceiver to receive a signal and/or send a signal. In addition, when the processor executes the instruction stored in the memory, the execution causes the processor to perform the method according to the third aspect or any possible implementation of the third aspect.

According to a twelfth aspect, an apparatus for managing a network slice instance is provided. The apparatus includes a transceiver, a memory, a processor, and a bus system. The transceiver, the memory, and the processor are connected to each other by using the bus system. The memory is configured to store an instruction. The processor is configured to execute the instruction stored in the memory to control the transceiver to receive a signal and/or send a signal. In addition, when the processor executes the instruction stored in the memory, the execution causes the processor to perform the method according to the fourth aspect or any possible implementation of the fourth aspect.

According to a thirteenth aspect, a system for managing a network slice instance is provided. The system includes the apparatus according to the fifth aspect or any possible implementation of the fifth aspect, the apparatus according to the sixth aspect or any possible implementation of the sixth aspect, the apparatus according to the seventh aspect or any possible implementation of the seventh aspect, and the apparatus according to the eighth aspect or any possible implementation of the eighth aspect; or
the system includes the apparatus according to the ninth aspect or any possible implementation of the ninth aspect, the apparatus according to the tenth aspect or any possible implementation of the tenth aspect, the apparatus according to the eleventh aspect or any possible implementation of the eleventh aspect, and the apparatus according to the twelfth aspect or any possible implementation of the twelfth aspect.

According to a fourteenth aspect, a computer readable medium is provided, configured to store a computer program, where the computer program includes an instruction used to perform the method according to the first aspect or any possible implementation of the first aspect.

According to a fifteenth aspect, a computer readable medium is provided, configured to store a computer program, where the computer program includes an instruction used to perform the method according to the second aspect or any possible implementation of the second aspect.

According to a sixteenth aspect, a computer readable medium is provided, configured to store a computer program, where the computer program includes an instruction used to perform the method according to the third aspect or any possible implementation of the third aspect.

According to a seventeenth aspect, a computer readable medium is provided, configured to store a computer program, where the computer program includes an instruction used to perform the method according to the fourth aspect or any possible implementation of the fourth aspect.

### BRIEF DESCRIPTION OF DRAWINGS

FIG. 1 is a schematic diagram of a network management architecture in the prior art;
FIG. 2 is an architectural diagram of an NSM&O according to an embodiment of this application;
FIG. 3 is a schematic diagram of a network management architecture to which an embodiment of this application is applied;
FIG. 4 is a schematic diagram of another network management architecture to which an embodiment of this application is applied;
FIG. 5 is a schematic diagram of another network management architecture to which an embodiment of this application is applied;
FIG. 6 is a schematic diagram of another network management architecture to which an embodiment of this application is applied;
FIG. 7 is a schematic flowchart of a method for managing a network slice instance according to an embodiment of this application;
FIG. 8 is a hierarchical structure diagram of an NSM&O according to an embodiment of this application;
FIG. 9 is a schematic diagram of updating a network function according to the embodiment of this application;
FIG. 10 is another schematic diagram of updating a network function according to the embodiment of this application;
FIG. 11 is another schematic diagram of updating a network function according to the embodiment of this application;
FIG. 12A and FIG. 12B are a schematic flowchart of another method for managing a network slice instance according to an embodiment of this application;
FIG. 13A and FIG. 13B are a schematic flowchart of another method for managing a network slice instance according to an embodiment of this application;
FIG. 14A and FIG. 14B are a schematic flowchart of another method for managing a network slice instance according to an embodiment of this application;
FIG. 15A and FIG. 15B are a schematic flowchart of another method for managing a network slice instance according to an embodiment of this application;
FIG. 16 is a schematic block diagram of an apparatus for managing a network slice instance according to an embodiment of this application;
FIG. 17 is a schematic block diagram of another apparatus for managing a network slice instance according to an embodiment of this application;
FIG. 18 is a schematic block diagram of another apparatus for managing a network slice instance according to an embodiment of this application;
FIG. 19 is a schematic block diagram of another apparatus for managing a network slice instance according to an embodiment of this application;
FIG. 20 is a schematic block diagram of another apparatus for managing a network slice instance according to an embodiment of this application;
FIG. 21 is a schematic block diagram of another apparatus for managing a network slice instance according to an embodiment of this application;
FIG. 22 is a schematic block diagram of another apparatus for managing a network slice instance according to an embodiment of this application; and
FIG. 23 is a schematic block diagram of another apparatus for managing a network slice instance according to an embodiment of this application.

### DESCRIPTION OF EMBODIMENTS

The following describes the technical solutions in the embodiments of this application with reference to the accompanying drawings in the embodiments of this application.

It should be understood that the technical solutions of the embodiments of this application may be applied to various communications systems, such as a Global System for Mobile Communications (Global System for Mobile communications, GSM), a Code Division Multiple Access (Code Division Multiple Access, CDMA) system, a Wideband Code Division Multiple Access (Wideband Code Division Multiple Access, WCDMA) system, a general packet radio service (general packet radio service, GPRS), a Long Term Evolution (Long Term Evolution, LTE) system, an LTE frequency division duplex (frequency division duplex, FDD) system, an LTE time division duplex (time division duplex, TDD), a Universal Mobile Telecommunications System (Universal Mobile Telecommunications System, UMTS), a Worldwide Interoperability for Microwave Access (Worldwide Interoperability for Microwave Access, WiMAX) communications system, and a future 5G communications system.

The embodiments of this application relate to a network slicing technology. The network slicing technology is to logically abstract a network into one or more network slices isolated from each other, where each network slice includes a series of logical network functions, to meet diversified requirements of different service types in a targeted manner. For example, in a 5th Generation (the 5th generation, 5G) network, as an on-demand networking mode, network slicing provides an operator with a new service that can be adjusted based on a changing user requirement and that can quickly meet a novel application requirement.

The network slicing technology abstracts a 5G network physical infrastructure resource into a plurality of mutually independent parallel network slice instances based on a scenario requirement. Customized tailoring of a network function and orchestration and management of the corresponding network function are performed on each network slice based on a requirement of a service scenario and a service model. A network slice instance may be considered as an instantiated 5G network. According to such a network structure, an operator is allowed to provide a network for a user as a service, and can freely combine entity networks according to indicators such as a rate, a capacity, coverage, a delay, reliability, security, and availability, so as to meet requirements of different users.

In the network slicing technology, network slice lifecycle management is a key issue that needs to be considered. The network slice lifecycle management includes creation, combination, update, deletion, and the like of network slice instances. For the creation, combination, and update of the network slice instances, a network device needs to determine an available network resource for each network slice instance, and configure a particular network function and a parameter for the network slice instance. For deletion of the network slice instances, the network device needs to release those particular network functions and network resources.

It should be noted that terms such as "network management architecture", "network system", and "system" are interchangeable. For ease of understanding, some terms appearing in this specification are described first.

Network slice: The concept network slice refers to a logical network customized on physical or virtual network infrastructures based on different service requirements.

Network slice instance: An network slice instance is a logical network that is truly running.

Network slice template: An network slice template is a mode of generating a network slice instance, and is used to provide a reference for generating a network slice instance. The network slice template specifies how a network slice instance should be generated. For example, the network slice module may indicate network functions included in a network slice, a key performance indicator (key performance indicators, KPI) that should be achieved, and the like.

Network function: A network function is a processing function in a network, and defines functionality behavior and interfaces. The network function may be implemented on dedicated hardware, implemented by running software on dedicated hardware, or implemented in a form of a virtualized function on a universal hardware platform. Therefore, from a perspective of implementation, network functions may be classified into a physical network function and a virtualized network function. From a perspective of use, network functions may be classified into a dedicated network function and a shared network function. Specifically, a plurality of network slice instances may independently use different network functions, where such a network function is referred to as a dedicated network function, or may share a same network function, where such a network function is referred to as a shared network function.

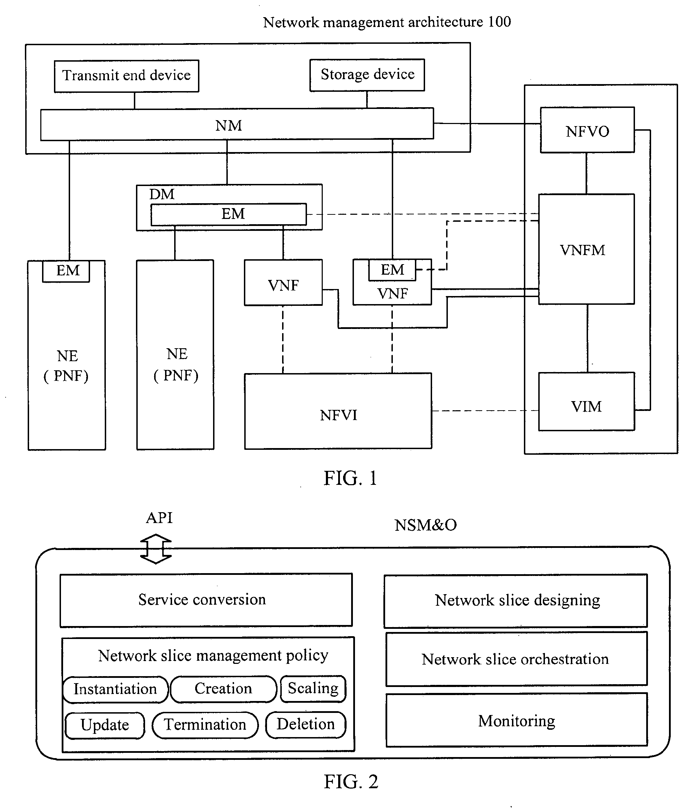

For ease of understanding the embodiments of this application, a network management architecture in FIG. 1 is first described. FIG. 1 shows a network management architecture 100. In an example, the network management architecture 100 in FIG. 1 may be a network management architecture of a 3GPP public land mobile network (public land mobile network, PLMN) integrating a network function virtualization (network function virtualized, NFV) management and orchestration (management and orchestration, MANO) module. Specifically, the network management architecture 100 further includes modules managing a physical network function and a virtualized network function. The following sequentially describes modules in the network management architecture 100.

Physical network function (physical network function, PNF) module: It is a fixed network function provided by a physical device. For example, the physical network function module may be a network element (network element, NE) in a conventional 3GPP network management architecture, namely, a physical network element. For example, the NE may be a base station, a mobility management entity (mobility management entity, MME), a serving gateway (serving gateway, SGW), or the like.

Virtualized network function (virtualized network function, VNF) module: It may be a minimum virtualized unit that can perform monitoring and management in the network management architecture. There is a communications interface between the VFN and an NFVI module described below. Based on the NFVI, the VNF module may create a virtualized network function and configure some parameters, to implement a network function.

Element manager (element manager, EM): It is a network module configured to manage a network element. The EM not only may be configured to manage a physical network function (that is, the PNF module) but also may be configured to manage a virtualized network function (that is, the VNF module).

Domain manager (domain manager, DM): It is a management system module that manages a range wider than that of the EM. The DM can manage one or more EMs. For example, the DM may be a management system of a manufacturer.

It should be noted that the EM and the DM are different in definition. The EM directly manages network devices of a same type. For example, the EM manages a series of base stations. The DM manages a network device belonging to an operator (vendor), and provides a domain management function. The DM manages a wider range than the EM. Usually, an EM device is configured to configure a network function. However, in the embodiments of this application, a possibility that the DM performs a procedure that is performed by the EM is not excluded.

Network manager (network manager, NM): It is a management module on a network layer, mainly providing related functions such as a network management function and switching between management devices. For example, the NM may be responsible for network resource distribution, configuration, control, monitoring, and the like. The NM is supported by the EM or the DM.

Network function virtualized infrastructure (network function virtualized infrastructure, NFVI) module: It is configured to deploy a virtualized network function (VNF), may be a set of running environments including software and hardware, and includes a virtualization layer, an abstract hardware resource, and the like.

NFV-MANO system module: An interface exists between the NFV-MANO system module and each of the NFVI module, the VNF module, the EM module, and the NM module, to manage a virtualized network function on the network layer. The NFV-MANO system module includes the following three modules:
a network function virtualization orchestrator (network function virtualization orchestrator, NFVO) module, configured to manage a network service and a VNF lifecycle, and optimize a network resource from global angles of the NFVI;
a virtualized network function manager (virtualized network function manager, VNFM) module, configured to manage the VNF module on the network layer; and
a virtualized infrastructure manager (virtualized infrastructure manager, VIM), having an interface with either the NFVI or the VNF, and configured to manage calculation, storage, network resource allocation, and the like of the NFVI.

It can be learned from the foregoing descriptions of the network management architecture 100 that, although the physical network function and the virtualized network function can be managed in the network management architecture 100 in FIG. 1, a network slice cannot be managed and orchestrated in the network management architecture 100. Therefore, the network management architecture 100 in FIG. 1 cannot meet an application requirement of a network slicing technology in a future communications system, to be specific, a network slice cannot be flexibly managed and orchestrated. To reduce deployment costs and the like, a physical network element and a virtualized network element may coexist for a long term and flexibly constitute a network slice. Therefore, a network management system is required, to orchestrate and manage physical and virtual network functions or network resources, to apply a network slice.

In the embodiments of this application, a network slice manager and orchestrator (network slice manager and orchestrator, NSM&O) module is introduced into the network management architecture 100, and the NSM&O manages a network slice instance creation process, to automatically create a network slice instance, thereby improving efficiency of managing the network slice instance.

The following describes a network management architecture in the embodiments of this application. Based on the existing network management architecture 100, the NSM&O module is introduced in the embodiments of this application. A schematic structural diagram of the NSM&O module is shown in FIG. 2, and main functions of the NSM&O module include any one of the following:
service conversion: receiving, through an interface (for example, an application programming interface (Application Programming Interface, API)), service description information sent by a transmit end device, and converting the service description information into a network requirement;
network slice designing: which describes composition of a network slice based on a service conversion result, and for example, may be designing a network slice template (network slice descriptor, NSLD);
a network slice management policy: which is a management policy of designing a network slice, and for example, may be a policy such as network slice instantiation, network slice creation, network slice scaling, network slice update, network slice termination, or network slice deletion;
network slice orchestration: used to specifically determine a network function included in a network slice instance and a used network resource; and
monitoring: used to detect and report a status parameter of a network slice instance, where, for example, a key performance indicator (key performance indicators, KPI) parameter of the network slice instance may be monitored.

The foregoing transmit end device is a device sending a request to the NSM&O module. For example, the transmit end device may be an operator, a third-party customer, a communications service related application, or any other physical device that possibly sends a request to the NSM&O.

Optionally, the network management architecture in the embodiments of this application may further include a storage device. The storage device may be configured to record information about a generated network slice instance.

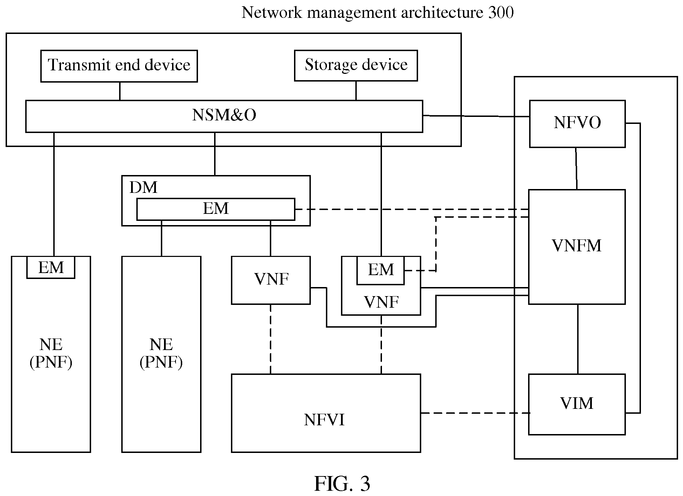

Four network management architectures applied in the embodiments of this application are respectively described in FIG. 3 to FIG. 6. Each of the four network management architectures includes an NSM&O module. For ease of distinguishing, the network management architectures in FIG. 3 to FIG. 6 are sequentially referred to as a network management architecture 300, a network management architecture 400, a network management architecture 500, and a network management architecture 600 below.

FIG. 3 shows a network management architecture 300 to which an embodiment of this application is applied. As shown in FIG. 3, the network management architecture 300 is a network management architecture obtained through improvement and modification based on the network management architecture 100. The network management architecture 300 does not include an NM module. Instead, the NSM&O module performs a function that is performed by the NM module in the network management architecture 100. In other words, in addition to the function shown in FIG. 2, the NSM&O module may further include all functions of the NM module. The NSM&O module may interact with an EM through a communications interface, to manage a network function corresponding to a network slice instance. The managing a network function includes managing a PNF module and a VNF module. The NSM&O module may further receive status information of the VNF module from an NFVO module through a communications interface, and send an instruction to the NFVO through the communications interface.

For the network management architecture 300, the NSM&O module can directly manage a physical network function, and can implement, by using the NFVO module, resource orchestration and management of an NFVI module and generation of a VNF.

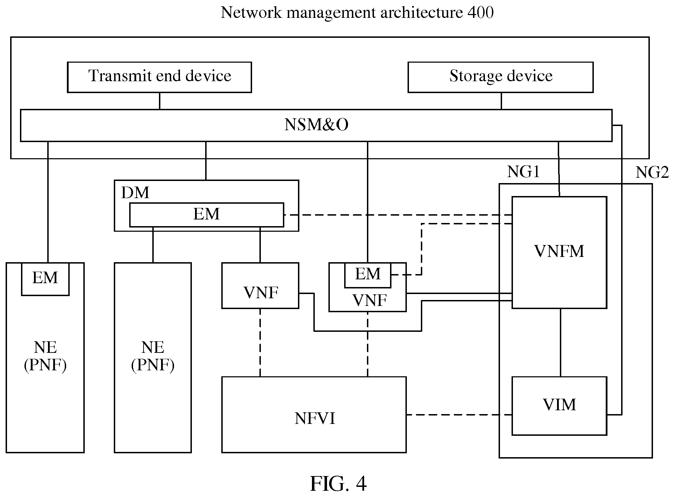

FIG. 4 shows another network management architecture 400 to which an embodiment of this application is applied. As shown in FIG. 4, the network management architecture 400 is a network management architecture obtained through improvement and modification based on the network management architecture 100. A difference between the network management architecture 400 and the network management architecture 300 lies in that the network management architecture 300 does not include an entity of an NFVO module. A function of the NFVO module is implemented by the NSM&O module. In other words, functions of the NSM&O module further include orchestration and management of a virtual network resource and management of a VNF lifecycle. There is a communications interface between the NSM&O module and a VNFM module. In FIG. 4, the interface may be referred to as an NG1 interface. There is a communications interface between the NSM&O module and a VIM module. In FIG. 4, the interface may be referred to as an NG2 interface.

The NSM&O module and the VNFM module may perform the following interaction through the NG1 interface: NFVI resource authorization, reservation, allocation, releasing, and the like for supporting a VNF; querying information about a running status, for example, querying a VNF instance; VNF initialization update, scaling, termination, and the like; and transmitting an event, status information, and the like related to the VNF.

The NSM&O module and the VIM module may perform the following interaction through the NG2 interface: NFVI resource reservation, allocation, releasing, and the like; VNF software image (image) increasing, deletion, update, and the like; and transmitting configuration information, an event, a measurement result, an upgrade record, and the like related to the NFVI.

For the network management architecture 400, in addition to directly managing a physical network function, the NSM&O module may further manage a virtualized network function and a VNF lifecycle, thereby orchestrating and managing all physical and virtual network resources and functions, and optimizing resources from global angles.

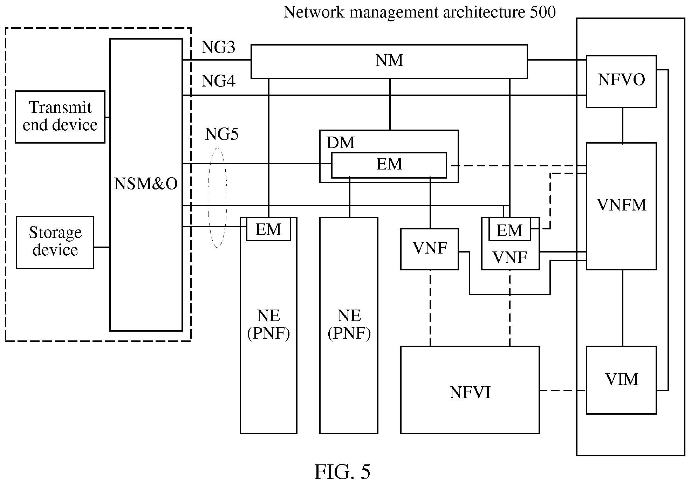

FIG. 5 shows another network management architecture 500 to which an embodiment of this application is applied. As shown in FIG. 5, an NM module is reserved in the network management architecture 500, and the NSM&O module and the NM module are mutually independent. In addition, there is a communications interface between the NSM&O module and the NM module. In FIG. 5, the communications interface may be referred to as an NG3 interface. There is also a communications interface between the NSM&O module and an NFVO module. In FIG. 5, the communications interface may be referred to as an NG4 interface. There is also a communications interface between the NSM&O module and an EM module. In FIG. 5, the communications interface may be referred to as an NG5 interface.

The NSM&O module and the NM module may perform the following interaction through the NG3 interface: transmitting negotiation information between the NSM&O module and the NM module, for example, the NSM&O module queries a VNF that is already generated by the NM module, the NM module feeds back information about the generated VNF to the NSM&O module and confirms that the NSM&O module is allowed to modify the information about the VNF, the NSM&O module notifies the NM module of PNFs/VNFs that need to be modified, and the NSM&O module notifies the NM module of specific modification content of the PNFs/VNFs.

The NSM&O module and the NFVO module may perform the following interaction through the NG4 interface: participating, by the NSM&O module, in VNF lifecycle management through the NG4 interface, for example, instructing the NFVO module to generate, update, and delete a VNF; querying, by the NSM&O module, the NFVO module for running information of a VNF and an NFVI; feeding back, by the NFVO module, the running information of the VNF and the NFVI to the NSM&O module; performing policy management, where the NSM&O module may send a policy to the NFVO module, to specify a VNF deployment requirement; and managing, by the NSM&O module, a VNF package through the NG4 interface.

The NSM&O module and the EM module may perform the following interaction through the NG5 interface: communicating, by the NSM&O module, with the EM module through the NG5 interface, to manage a PNF and a VNF (if the EM supports management of the VNF).

For the network management architecture 500, the NSM&O module interacts with each physical module in FIG. 1 through a new communications interface. The NSM&O module may orchestrate and manage a virtual resource and participate in VNF lifecycle management by using the NFVO module. The NSM&O module and the NM module both can directly manage a PNF. In addition, the NSM&O module and the NM module both can manage a VNF by using the NFVO module or the EM module. Therefore, for management of the PNF and the VNF, the NSM&O module and the NM module may coordinate through communication.

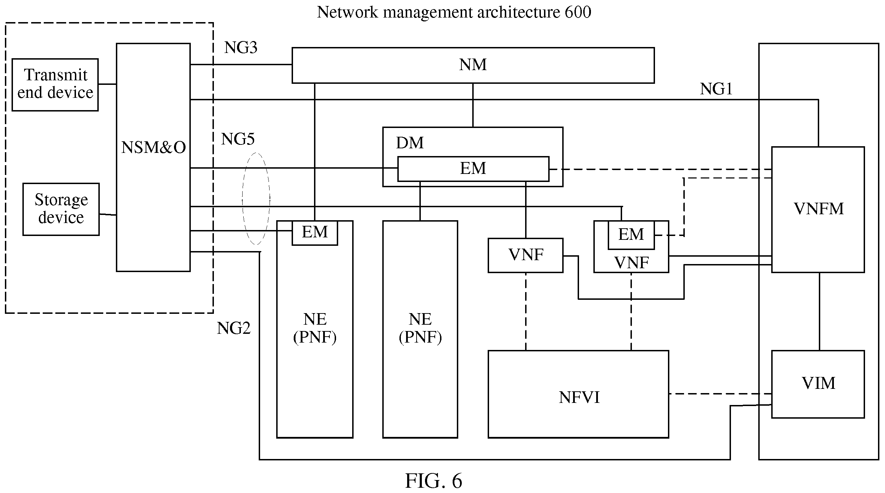

FIG. 6 shows another network management architecture 600 to which an embodiment of this application is applied. As shown in FIG. 6, an NM module is also maintained in the network management architecture 600. An NSM&O module and the NM module are also mutually independent. A difference between the network management architecture 600 and the network management architecture 500 lies in that the network management architecture 600 does not include an entity of an NFVO module. A function of the NFVO module is implemented by the NSM&O module. In other words, functions of the NSM&O module further include orchestration and management of a virtual network resource and management of a VNF lifecycle. There is a communications interface between the NSM&O module and a VNFM module. In FIG. 6, the communications interface may be referred to as an NG1 interface. There is a communications interface between the NSM&O module and a VIM module. In FIG. 6, the communications interface may be referred to as an NG2 interface. There is a communications interface between the NSM&O module and an EM module. In FIG. 6, the communications interface may be referred to as an NG5 interface. For specific functions of the NG1 interface, the NG2 interface, and the NG5 interface, refer to same or similar content in FIG. 4 and FIG. 5. For brevity, details are not described herein again.

For the network management architecture 600, the NSM&O module interacts with each physical module in FIG. 1 through a new communications interface. The NSM&O module may orchestrate and manage a virtual resource and participate in VNF lifecycle management by using the NFVO module. The NSM&O module and the NM module both can directly manage a PNF. Therefore, for management of the PNF, the NSM&O module and the NM module may coordinate through communication. In addition, because the NSM&O module is integrated with the function of the NSFO module, the NSM&O module can further directly orchestrate and manage a virtual network resource and participate in VNF lifecycle management. The NM module does not manage a virtual network resource and a VNF.

A person skilled in the art can understand that, examples in FIG. 3 to FIG. 6 are only to help a person skilled in the art understand the embodiments of this application, rather than limit the embodiments of this application to specific values or specific scenarios in the examples. Apparently, a person skilled in the art may make various equivalent modifications or changes based on the examples in FIG. 3 to FIG. 6. Such modifications or changes shall also fall within the scope of the embodiments of this application.

In addition, it should be noted that the functional modules and units introduced above are considered from a perspective of the functions of the functional modules and units. During actual application, the foregoing functional modules may exist alone physically, or two or more devices may be integrated into one unit. Any equivalent variation or replacement readily figured out by a person of ordinary skill in the art within the technical scope disclosed by this application shall fall within the protection scope of this application.

It should be understood that, a first network device mentioned in this specification may be a device (which is briefly referred to as an "NSM&O" below) including the NSM&O module, a second network device may be a device (which is briefly referred to as an "EM" below) including the EM module, a third network device may be a device (which is briefly referred to as a "VNFM" below) including the VNFM module or a device (which is briefly referred to as an "NFVO" below) including the NFVO module, a fourth network device may be a device (which is briefly referred to as a "VIM" below) including the VIM module, and a fifth network device may be a device (which is briefly referred to as an "NM" below) including the NM module. In a process in which a system manages a network slice instance, the first network device, the second network device, the third network device, the fourth network device, and the fifth network device may implement respective corresponding functions, thereby flexibly managing the network slice instance.

It should be understood that, the first network device, the second network device, the third network device, the fourth network device, and the fifth network device may be specifically network management devices, configured to monitor, manage, and maintain a network element during network operation and maintenance, but this is not limited in the embodiments of this application.

For ease of understanding, the embodiments of this application are described below by using the NSM&O, the EM, the VNFM (or the NFVO), the VIM, and the NM as execution bodies. However, this is not limited in the embodiments of this application.

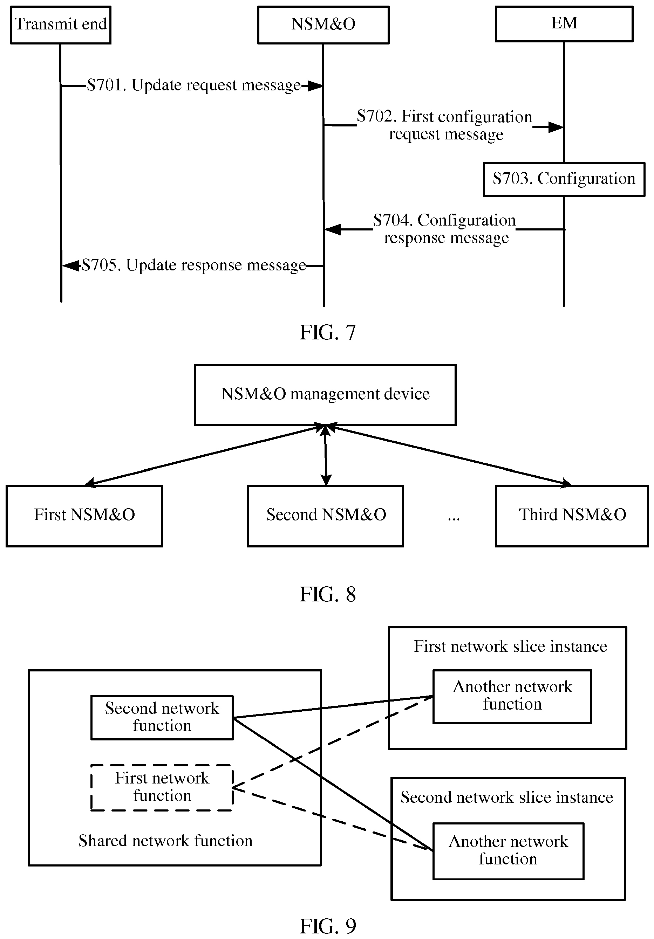

FIG. 7 shows a method for managing a network slice instance 700 according to an embodiment of this application. The method 700 may be applied to the network management architecture 300 shown in FIG. 3, the network management architecture 400 shown in FIG. 4, the network management architecture 500 shown in FIG. 5, and the network management architecture 600 shown in FIG. 6. This is not limited in this embodiment of this application.

S701. A transmit end sends an update request message to an NSM&O, where the update request message carries identification information of a first network slice instance, and the update request message is used to request to update a first network function of the first network slice instance to a second network function; and the NSM&O receives the update request message.

S702. The NSM&O sends a first configuration request message to an EM based on the update request message, where the first configuration request message is used to request to configure the second network function for the first network slice instance; and the EM receives the first configuration request message.

S703. The EM configures the second network function for the first network slice instance based on the first configuration request message.

S704. The EM sends a configuration response message to the NSM&O, where the configuration response message is used to indicate that the second network function has been configured; and the NSM&O receives the configuration response message.

S705. The NSM&O sends an update response message to the transmit end based on the configuration response message, where the update response message is used to indicate that the first network function has been updated to the second network function.

Specifically, in S701, the transmit end may send the update request message to the NSM&O through an application programming interface (application programming interface, API), where the update request message is used to request to update the first network function of the first network slice instance. It should be understood that, the update request message may carry two parameters: A first parameter may be used to indicate a network function that needs to be updated, that is, the first network function, and may be specifically a name or other identification information of the first network function. A second parameter may be used to indicate an updated network function, that is, the second network function. The NSM&O may obtain a new-version template of the second network function by querying a database, or may update the first network function to the second network function by updating a network slice instance template, for example, directly updating a current network slice template v1 to a network slice template v2, where all or some network functions of v1 and v2 are different.

In S702, after receiving the update request message, the NSM&O sends the first configuration request message to the EM, to request to configure the updated network function, so that the updated network function can provide a service for the first network slice instance. Specifically, network functions may be classified into a shared network function and a dedicated network function depending on whether a network function can be shared by a plurality of network slice instances. If the second network function is a shared network function, the first configuration request message may include the following configuration parameters: (1) a network slice related parameter, for example, an identifier of the first network slice instance, a type of the first network slice instance, information about other network functions included in the first network slice instance, or a parameter that needs to be detected and reported in the first network slice instance; and (2) a conventional running parameter, for example, an MMEC or an MME Pool. If the second network function is a dedicated network function, the first configuration request message may include the following configuration parameters: (1) a network slice related parameter, for example, an identifier of the first network slice instance, a type of the first network slice instance, or a parameter that needs to be monitored and reported in the first network slice instance; and (2) a conventional running parameter, for example, an IP address of a gateway or a tunnel ID.

In S703, the EM configures a function parameter of the second network function based on the first configuration request message, for example, modifies a paging area paging area or an MME group.

In this embodiment of this application, the NSM&O receives the update request message sent by the transmit end, determines, based on the update request message, that the first network function of the first network slice instance needs to be updated to the second network function, sends the first configuration request message to the EM to request the EM to configure the second network function, then receives the configuration response message sent by the EM, and sends the update response message to the transmit end, to indicate that the update has been completed. Therefore, according to the method for managing a network slice instance provided in this embodiment of this application, a network function for providing a service for a network slice instance can be modified and upgraded, thereby updating the network slice instance, and improving user experience.

It should be understood that, the transmit end may be an operator, a third-party customer, a service related application, or any entity that possibly sends a request to the NSM&O within service provider domain. This is not limited in this embodiment of this application.

In an optional embodiment, the transmit end may be an NSM&O management device. As shown in FIG. 8, the NSM&O management device may manage a first NSM&O, a second NSM&O, and a third NSM&O. In this architecture, the NSM&O may be at least one of the first NSM&O, the second NSM&O, and the third NSM&O. That is, the NSM&O management device may manage each NSM&O and send an update request message to each NSM&O, to request each NSM&O to update a network slice instance managed by the NSM&O. Specifically, a process in which the first NSM&O, the second NSM&O, and the third NSM&O separately update the network slice instances managed by the first NSM&O, the second NSM&O, and the third NSM&O is the method 700. The three NSM&Os may separately perform updating in sequence, or may perform updating in parallel. This is not limited in this embodiment of this application.

In an implementation, the NSM&O management device is a general control orchestrator, and manages an NSM&O in each domain. For example, a network slice instance may include a core network slice sub-instance and an access network slice sub-instance. Alternatively, a network slice instance may be divided into a plurality of slice sub-instances provided by different operator devices. Each network slice sub-instance is managed by an NSM&O in each domain. After receiving the update request message, the NSM&O management device may determine which network slice sub-instances need to be updated, and then directly instruct NSM&Os corresponding to the network slice sub-instances to perform updating.

In an optional embodiment, before step S702 of sending, by the NSM&O, a first configuration request message to an EM based on the update request message, the method further includes: determining, by the NSM&O based on the update request message, whether an available second network function exists; sending, by the NSM&O, a creation request message to a VNFM or an NFVO if no available second network function exists and the second network function is a virtualized network function, where the creation request message is used to request to create the second network function, and the creation request message carries a parameter of the second network function; correspondingly, receiving, by the VNFM or the NFVO, the creation request message; creating, by the VNFM or the NFVO, the second network function based on the creation request message, and sending a first response message to the NSM&O, where the first response message is used to indicate that the second network function has been created; and correspondingly, receiving, by the NSM&O, the first response message. Step S702 of sending, by the NSM&O, a first configuration request message to an EM based on the update request message includes: sending, by the NSM&O, the first configuration request message to the EM based on the first response message.

Specifically, after receiving the update request message sent by the transmit end, the NSM&O may first determine whether an available second network function exists. If a second network function meeting a requirement exists, the NSM&O may directly send the first configuration request message to the EM, to request the EM to configure the second network function for the first network slice instance. If no second network function meeting a requirement exists, two cases need to be considered: If the second network function is a physical network function, the NSM&O may also directly send the first configuration request message to the EM, to directly configure the second network function. If the second network function is a virtualized network function, the NSM&O determines that the second network function needs to be created.

After determining the second network function that needs to be created, the NSM&O sends the creation request message to the VNFM or the NFVO, to request the VNFM or the NFVO to create the second network function. The VNFM or the NFVO receives the creation request message, creates the second network function, and sends the first response message to the NSM&O, to indicate that the second network function has been created. The NSM&O sends the first configuration request message to the EM based on the first response message, to request to configure the newly created second network function.

It should be understood that, for a case in which the second network function is a shared network function, the configuration parameters in the first configuration request message may further include an identifier of the second network function used to indicate that the newly generated shared network function currently serves only the first network slice instance, and may be shared with another network slice instance in future. This is not limited in this embodiment of this application.

It should further be understood that, a method used by the NSM&O to send the creation request message to the NFVO may be applied to the network management architecture 300 shown in FIG. 3 or the network management architecture 500 shown in FIG. 5, and a method used by the NSM&O to send the creation request message to the VNFM may be applied to the network management architecture 400 shown in FIG. 4 or the network management architecture 600 shown in FIG. 6.

It should be noted that, for a management architecture including the NFVO, the NSM&O may send the creation request message to the NFVO, and the NFVO interacts with the VNFM and a VIM based on the creation request message, to create the second network function. For a management architecture including no NFVO, the NSM&O may send the creation request message to the VNFM. Because the VNFM can perform parameter checking and processing only on a related network function, the NSM&O further needs to request a VIM to allocate a network resource to the second network function, thereby configuring the second network function.

In an optional embodiment, before the NSM&O receives the first response message sent by the VNFM based on the creation request message, the method further includes: receiving, by the NSM&O, a second response message sent by the VNFM based on the creation request message, where the second response message is used to indicate that the second network function is allowed to be created; sending, by the NSM&O, a resource request message to the VIM based on the second response message, where the resource request message is used to request to allocate a resource to the second network function; correspondingly, receiving, by the VIM, the resource request message; allocating, by the VIM, a resource to the second network function, and sending a third response message to the NSM&O, where the third response message is used to indicate that the resource has been allocated to the second network function; correspondingly, receiving, by the NSM&O, the third response message, and sending, by the NSM&O, a first notification message to the VNFM, where the first notification message is used to inform that the resource has been allocated to the second network function; correspondingly, receiving, by the VNFM, the first notification message; and configuring, by the VNFM, a deployment parameter of the second network function, and sending the first response message to the NSM&O. Correspondingly, the NSM&O receives the first response message.

Specifically, for the management architecture including no NFVO, the NSM&O may send the creation request message to the VNFM. The VNFM first sends the second response message to the NSM&O based on the creation request message, to indicate that the second network function is allowed to be created. Then, the NSM&O sends the resource request message to the VIM, to request the VIM to allocate a network resource to the second network function. After the network resource has been allocated, the VNFM configures a related parameter, and sends the first response message to the NSM&O, to indicate that the second network function has been created.

It should be understood that, after the VNFM configures the parameter of the second network function, the VNFM may further send an addition request message to the EM, to request the EM to add the second network function, to become a managed device of the second network function, but this is not limited in this embodiment of this application.

In an optional embodiment, before step S702 of sending, by the NSM&O, a first configuration request message to an EM based on the update request message, the method further includes: sending, by the NSM&O, a reservation request message to the EM or the VIM based on the update request message, where the reservation request message is used to request to reserve a resource for the second network function; correspondingly, receiving, by the EM or the VIM, the reservation request message, reserving, by the EM or the VIM, a resource for the second network function based on the reservation request message, and sending a reservation response message to the NSM&O, where the reservation response message is used to indicate whether the resource has been successfully reserved for the second network function; and receiving, by the NSM&O, the reservation response message. Step S702 of sending, by the NSM&O, a first configuration request message to an EM based on the update request message includes: sending, by the NSM&O, the first configuration request message to the EM based on the update request message when the reservation response message indicates that the resource has been successfully reserved for the second network function.

Specifically, before requesting the EM to configure the second network function, the NSM&O may first reserve a network resource, that is, request the EM or the VIM to reserve a resource for the second network function. If the second network function is a physical network function, the NSM&O may send the reservation request message to the EM, to request the EM to reserve a physical resource. If the second network function is a virtualized network function, the NSM&O may send the reservation request message to the VIM, to request the VIM to reserve a virtual resource. After the NSM&O receives the reservation response message sent by the EM or the VIM, if the reservation response message indicates that the resource has been successfully reserved, the NSM&O may send the first configuration request message to the EM, or if the reservation response message indicates a resource reservation failure, the NSM&O may directly send the update response message to the transmit end, where the update response message is used to indicate a network function update failure, and the update response message may further indicate a reason for the update failure, for example, insufficient resources.

Optionally, before the NSM&O sends the reservation request message to the EM or the VIM, the NSM&O may first send a query request to the EM, the VNFM, and the VIM, to query a running status of a network function and a network resource occupation status, and determine, based on a query result, whether to reserve a resource. This is not limited in this embodiment of this application.

In an optional embodiment, before step S702 of sending, by the NSM&O, a first configuration request message to an EM based on the update request message, the method further includes: determining, by the NSM&O based on the update request message, whether the first network function is a shared network function; if the first network function is a shared network function, determining, by the NSM&O, at least one second network slice instance sharing the first network function with the first network slice instance; and determining, by the NSM&O, whether the first network function is allowed to be updated for each of the at least one second network slice instance. Step S702 of sending, by the NSM&O, a first configuration request message to an EM based on the update request message includes: sending, by the NSM&O, the first configuration request message to the EM if the first network function is allowed to be updated to the second network function for all or some of the at least one second network slice instance, where the configuration request message is further used to request to configure the second network function for the all or some second network slice instances for which the first network function is allowed to be updated.

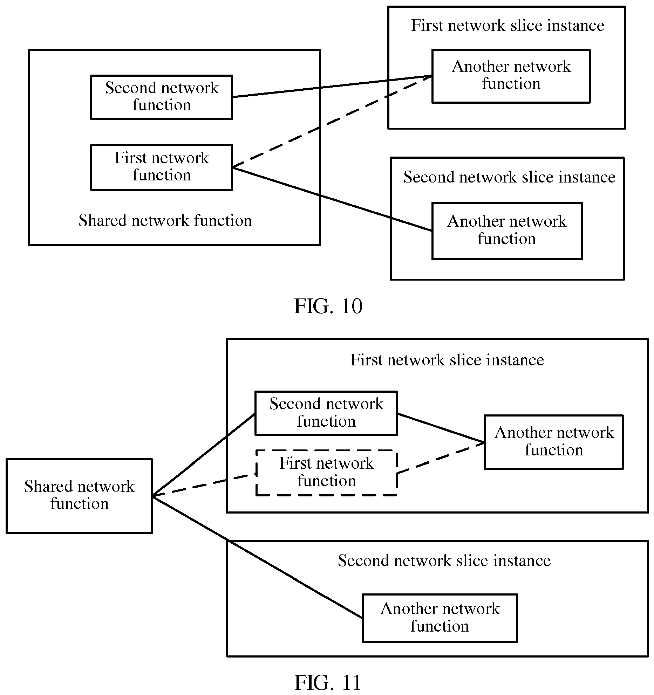

Specifically, the NSM&O may first determine whether the first network function is a shared network function or a dedicated network function. If the first network function is a dedicated network function, to be specific, provides a service only for the first network slice instance, the NSM&O may directly determine that the first network function needs to be updated, and configure the second network function. If the first network function is a shared network function, before updating the first network function, the NSM&O needs to consider whether the first network function is allowed to be updated for another network slice sharing the first network function. Therefore, when it is determined that the first network function is a shared network function, the NSM&O may first determine the at least one second network slice instance sharing the first network function with the first network slice instance, determine whether the first network function is allowed to be updated for the at least one second network slice instance, and configure the second network function based on an actual situation. In conclusion, specific implementations may be divided into the following several cases:
(1) The first network function is a shared network function, and the first network function is allowed to be updated for all second network slice instances sharing the first network function. In this case, the NSM&O may directly configure the second network function for all network slices sharing the first network function. As shown in FIG. 9, the NSM&O may update the first network function shared by the first network slice instance and the second network slice instance to the second network function.
(2) The first network function is a shared network function, and the first network function is allowed to be updated for some second network slice instances sharing the first network function, but the first network function is not allowed to be updated for other second network slice instances. In this case, the NSM&O may configure the second network function only for the second network slice instances for which update is allowed, may still use the first network function to provide a service for those network slice instances for which the first network function is not allowed to be updated. As shown in FIG. 10, the first network function is not allowed to be updated for the second network slice instance. In this case, the NSM&O may update only the first network function of the first network slice instance to the second network function.
(3) The first network function is a dedicated network function or the first network is a shared network function, but the first network function is allowed to be updated for none of the second network slice instances sharing the first network function. In the two cases, the NSM&O may configure the second network function only for the first network slice instance. As shown in FIG. 11, the NSM&O updates the first network function of the first network slice into the second network function. Because the first network function is a dedicated network function, this does not affect the second network slice instance.

It should be understood that, when the first network function is a shared network function, there may alternatively be other different implementations. For example, if the first network function is not allowed to be updated for the at least one second network slice instance, the NSM&O may directly return an update response message to the transmit end, to indicate an update failure. Alternatively, when the first network function is allowed to be updated for none of the second network slice instances sharing the first network function, the NSM&O returns an update response message to the transmit end, to indicate an update failure. This is not limited in this embodiment of this application.

In an optional embodiment, after the NSM&O updates the first network function to the second network function, the method further includes: deleting, by the NSM&O, the first network function for the first network slice instance.

Specifically, after the NSM&O determines that the second network function has been configured, the NSM&O may delete the original first network function. It should be understood that, herein, it only means that the first network function is deleted for the first network slice instance. Existence of the first network function depends on attributes of the first network function, to be specific, whether the first network function is a physical network function or a virtualized network function and whether the first network function is a shared network function or a dedicated network function.

In an optional embodiment, the deleting, by the NSM&O, the first network function for the first network slice instance includes: sending, by the NSM&O, a second configuration request message to the EM if the first network function is a physical network function, where the second configuration request message is used to request to configure that the first network function no longer provides a service for a network slice instance for which the first network function is allowed to be updated; or if the first network function is a virtualized network function, the first network function is a shared network function, and the first network function is not allowed to be updated for at least one second network slice instance sharing the first network function, sending, by the NSM&O, a third configuration request message to at least one of the EM, the VNFM, and the VIM, where the third configuration request message is used to request to configure that the first network function no longer provides a service for a network slice instance for which the first network function is allowed to be updated; or if the first network function is a virtualized network function, and the first network function is generated by the NM, sending, by the NSM&O, a fourth configuration request message to at least one the EM, the VNFM, and the VIM, where the fourth configuration request message is used to request to configure that the first network function no longer provides a service for a network slice instance for which the first network function is allowed to be updated.

It should be understood that, because the physical network function is a physical device, and cannot be deleted, when the first network function is a physical network function, the NSM&O may configure that the first network function no longer provides a service for the first network slice instance, to delete the first network function of the first network slice instance. When the first network function is a virtualized network function, the NSM&O may delete the first network function that is no longer needed. Therefore, determining needs to be performed based on a plurality of conditions.

Specifically, the deletion of the first network function may include the following several cases:
(1) The first network function is a physical network function. The NSM&O may request to configure that the first network function no longer provides a service for a network slice instance for which the first network function is allowed to be updated. It should be understood that, the network slice instance for which the first network function is allowed to be updated includes the first network slice instance.
(2) The first network function is a virtualized network function, and the first network function is not allowed to be updated for the at least one second network slice instance sharing the first network function. In this case, it indicates that the first network function is still needed, and cannot be directly deleted. The NSM&O may request to configure that the first network function no longer provides a service for a network slice instance for which the first network function is allowed to be updated. It should be understood that, if the update is allowed for none of the at least one second network slice instance, the network slice instance for which the first network function is allowed to be updated is only the first network slice instance. If the update is not allowed for some of the at least one second network slice instance, the network slice instance for which the first network function is allowed to be updated includes the first network slice instance and the second network slice instances for which the first network function is allowed to be updated.
(3) The first network function is a virtualized network function, and the first network function is generated by the NM. In this case, the first network function cannot be deleted, and it also needs to configure that the first network function no longer provides a service for a network slice instance for which the first network function is allowed to be updated.
(4) The first network function is a virtualized network function, the first network function is allowed to be updated for all second network slice instances sharing the first network function, and the first network function is not generated by the NM. In this case, the first network function can be deleted.

In an optional embodiment, the deleting, by the NSM&O, the first network function for the first network slice instance includes: if the first network function is a virtualized network function, the first network function is a shared network function, the first network function is allowed to be updated for all second network slice instances sharing the first network function, and the first network function is not generated by the NM, sending, by the NSM&O, a first termination request message to the EM, where the first termination request message is used to request to terminate management of the first network function; correspondingly, receiving, by the EM, the first termination request message; deleting, by the EM, a management object of the first network function based on the first termination request message, and sending a first termination acknowledgment message to the NSM&O; correspondingly, receiving, by the NSM&O, the first termination acknowledgment message; sending, by the NSM&O, a second termination request message to the VNFM based on the first termination acknowledgment message, where the second termination request message is used to request to terminate the first network function; correspondingly, receiving, by the VNFM, the second termination request message; terminating, by the VNFM, the first network function based on the second termination request message, and sending a second termination acknowledgment message to the NSM&O; and correspondingly, receiving, by the NSM&O, the second termination acknowledgment message.

Specifically, the NSM&O may send the termination request messages to the EM and the VNFM, to be specific, send the first termination request message to the EM to request to terminate management of the first network function and send the second termination request message to the VNFM to request to terminate the first network function, thereby deleting the first network function.

It should be understood that, for the management architecture including the NFVO, the NSM&O may send the second termination acknowledgment message to the NFVO, so that the NFVO, the VNFM, and the VIM perform a subsequent deletion operation. This is not limited in this embodiment of this application.

In an optional embodiment, after the receiving, by the NSM&O, the second termination acknowledgment message sent by the VNFM based on the second termination request message, the method further includes: sending, by the NSM&O, a third termination request message to the VIM based on the second termination acknowledgment message, where the third termination request message is used to request to delete a network resource and a network connection related to the first network function; and receiving, by the NSM&O, a third termination acknowledgment message sent by the VIM based on the third termination request message.

Specifically, for the management architecture including no NFVO, the NSM&O further needs to send a third termination request message to the VIM, to request the VIM to delete the network resource and the network connection related to the first network function.

In an optional embodiment, before the sending, by the NSM&O, a first configuration request message to an EM based on the update request message, the method further includes: determining, by the NSM&O, whether a third network function dependent on the first network function exists in the first network slice instance; and if the third network function exists, sending, by the NSM&O, a modification request message to at least one of the EM, the VNFM, and the VIM, where the modification request message is used to request to modify the third network function.

It should be understood that, dependency may exist between network functions. After a network function is updated, whether configuration modification needs to be correspondingly performed on another network function on which the network function is dependent needs to be determined. For example, a connection management (connection management, SM) function has a function of selecting a gateway (gateway, GW) to establish a data plane connection. When a version and a characteristic of a gateway changes, the SM needs to be notified of a specific change, so that when establishing the data plane connection, the SM can master new GW information. Therefore, another network function dependent on an updated network function is referred to as a dependency network function. For example, the GW is an updated network function, and the SM is a dependency network function.

Specifically, in this embodiment of this application, the NSM&O may first determine whether a third network function dependent on the first network function exists in the first network slice instance. If the third network function exists, the NSM&O may modify the third network function, thereby avoiding impact of the update of the first network function on the third network function.

In an optional embodiment, before the sending, by the NSM&O, a modification request message to at least one of the EM, the VNFM, and the VIM, the method further includes: if the third network function exists, determining, by the NSM&O, whether the third network function is a shared network function; if the third network function is a shared network function, determining, by the NSM&O, at least one third network slice instance sharing the third network function; and determining, by the NSM&O, whether the third network function is allowed to be modified for each of the at least one third network slice instance. The sending, by the NSM&O, a modification request message to at least one of the EM, the VNFM, and the VIM includes: sending, by the NSM&O, the modification request message to at least one of the EM, the VNFM, and the VIM when the third network function is allowed to be modified for all third network slice instances sharing the third network function.

Specifically, if the third network function is a shared network function, before modifying the third network function, the NSM&O may first determine whether the third network function is allowed to be modified for the at least one third network slice instance sharing the third network function, and then modify the third network function when the modification is allowed for all third network slice instances. It should be understood that, whether the third network function needs to be modified may be determined based on an actual situation. This is not limited in this embodiment of this application.

In an optional embodiment, before the sending, by the NSM&O, a first configuration request message to an EM based on the update request message, the method further includes: sending, by the NSM&O, a first query request message to a storage device, where the first query request message is used to query validity of the update request message, and the first query request message carries an identifier of the transmit end; correspondingly, receiving, by the storage device, the first query request message; performing, by the storage device, query, and sending a first query response message to the NSM&O, where the first query response message is used to indicate whether the update request message is valid; and correspondingly, receiving, by the NSM&O, the first query response message. The sending, by the NSM&O, a first configuration request message to an EM based on the update request message includes: sending, by the NSM&O, the first configuration request message to the EM when the update request message is valid.

Specifically, when a network slice instance is created or during user initialization, the storage device stores subscription information related to a user and a correspondence between the network slice instance and the user. Therefore, before receiving the update request message sent by the transmit end, the NSM&O may first send the first query request message to the storage device, to query whether the update request message is valid, and then send the first configuration request message to the EM when the update request message is valid.

In this way, an unauthorized user can be prevented from maliciously updating a network slice instance, and security of managing a network slice instance can be improved.

In an optional embodiment, after the NSM&O receives the configuration response message sent by the EM based on the first configuration request message, the method further includes:
sending, by the NSM&O, an update notification message to the storage device, where the update notification message carries updated information of the first network slice instance; correspondingly, receiving, by the storage device, the update notification message; storing, by the storage device, update information of the first network slice instance, and sending a storage success message to the NSM&O; and correspondingly, receiving, by the NSM&O, the storage success message.

In an optional embodiment, before the sending, by the NSM&O, a first configuration request message to an EM based on the update request message, the method further includes: sending, by the NSM&O, a second notification message to the NM, where the second notification message is used to inform that the second network function is to be configured; correspondingly, receiving, by the NM, the second notification message, and sending a third response message to the NSM&O based on the second notification message; and correspondingly, receiving, by the NSM&O, the third response message.

Specifically, for a management architecture including the NM, both the NSM&O and the NM can manage a physical network function and a virtualized network function. Therefore, to avoid a configuration conflict, the NSM&O and the NM need to coordinate. The NSM&O may send the second notification message to the NM, to inform of a to-be-configured network function, and perform configuration after receiving the third response message fed back by the NM.

In an optional embodiment, before the sending, by the NSM&O, a second notification message to the VNFM, the method further includes: sending, by the NSM&O, a second query request message to the NM, where the second query request message is used to request to query an existing virtualized network function; correspondingly, receiving, by the NM, the second query request message; performing, by the NM, query based on the second query request message, and sending a second query response message to the NSM&O, where the second query response message is used to feed back configuration information of the existing virtualized network function; and correspondingly, receiving, by the NSM&O, the second query response message. The sending, by the NSM&O, a second notification message to the NM includes: sending, by the NSM&O, the second notification message to the NM based on the second query response message.

Specifically, the NSM&O may query the NM for a network function generated by the NM, where the network function is mainly a virtualized network function. This is because a physical network function may be directly managed by the NSM&O, but some configurations of a virtualized network function may be stored only in the NM and the NFVO does not store all configurations. Therefore, the NSM&O needs to query the NM for an existing network function, and performs configuration based on a feedback of the NM, thereby avoiding conflicting with the NM.

In an optional embodiment, after the NSM&O receives the configuration response message sent by the EM based on the first configuration request message, the method further includes: sending, by the NSM&O, network function configuration information to the NM, where the network function configuration information carries a configuration parameter of the second network function.

Specifically, after configuring the second network function, the NSM&O may send, to the NM, the network function configuration information carrying the configuration parameter of the second network function, so that the NM learns of modifications that are made by the NSM&O.

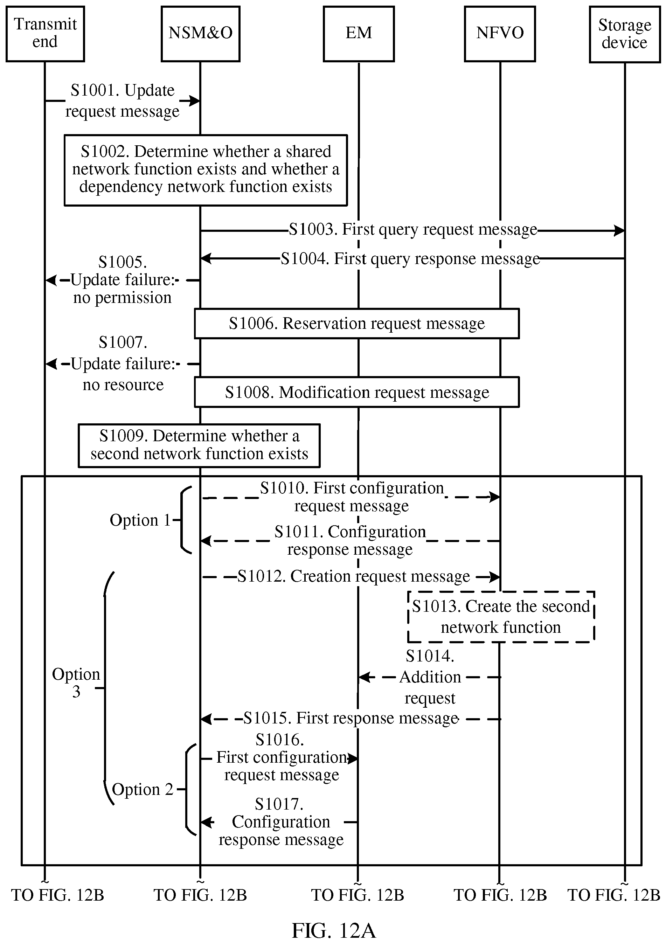

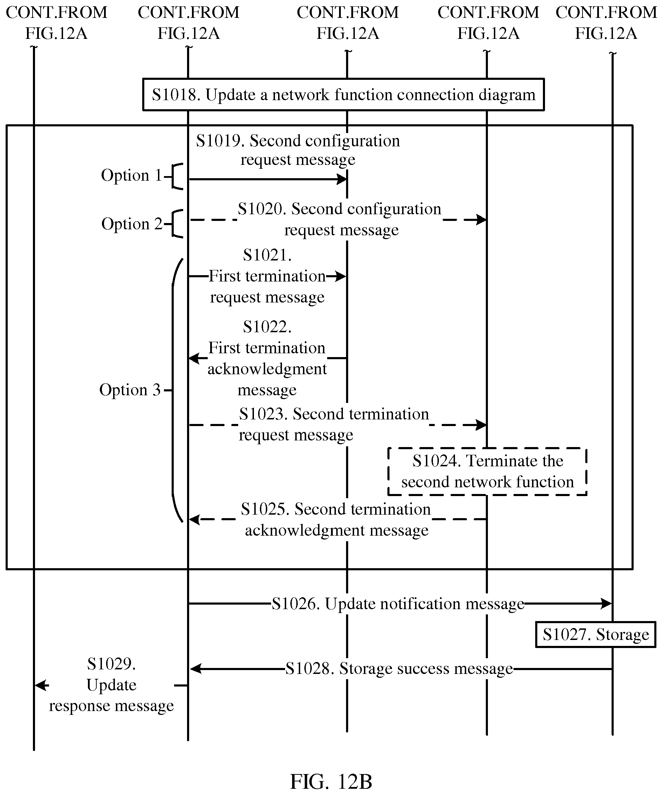

FIG. 12A and FIG. 12B show another method 1000 for managing a network slice instance according to an embodiment of this application. The method 1000 may be applied to the network management architecture 300 shown in FIG. 3, but this is not limited in this embodiment of this application.

In S1001, a transmit end sends an update request message to the NSM&O, where the update request message carries identification information of a first network slice instance, information about a first network function, and information about a second network function, and the update request message is used to request to update the first network function of the first network slice instance to the second network function; and the NSM&O receives the update request message.

In S1002, the NSM&O determines, based on the update request message, whether the first network function is a shared network function, and when the first network function is a shared network function, determines at least one second network slice instance that shares the first network function and that is different from the first network slice instance; and the NSM&O determines whether another network function dependent on the first network function exists in the first network slice.

In S1003, the NSM&O sends a first query request message to a storage device, where the first query request message is used to request to query whether the update request message is valid; and the storage device receives the first query request message.

In S 1004, the storage device performs query and returns a first query response message to the NSM&O; and the NSM&O receives the first query response message.

In S1005, if the first query response message indicates that the update request message is invalid, the NSM&O sends an update response message to the transmit end, where the update response message is used to indicate an update failure, and further, the update response message may carry a reason for the update failure, to be specific, there is no permission.

It should be understood that, if S1005 is performed, an entire update procedure ends.

Optionally, in S1006, if the first query response message indicates that the update request message is valid, the NSM&O determines whether the second network function that is updated to is a physical network function or a virtualized network function; and if the second network function is a physical network function, the NSM&O sends a reservation request message to the EM, to request the EM to reserve a physical resource for the second network function; or if the second network function is a virtualized network function, the NSM&O sends a reservation request message to the NFVO, to request the NFVO to reserve a virtual resource for the second network function. The EM or the NFVO receives the reservation request message, reserves a network resource based on an actual situation, and feeds back a reservation result to the NSM&O.

It should be understood that, when the NFVO receives the reservation request message, the NFVO may instruct a VIM to reserve a resource. This is not a key point in this embodiment of this application, and therefore is not reflected in the figure, but this step exists. It should further be understood that, subsequent interaction among the NFVO, a VNFM, and the VIM exists by default, and details are not further described in this embodiment of this application.

In S1007, based on the reservation result of the EM or the NFVO, if determining a reservation failure, the NSM&O sends an update response message to the transmit end, where the update response message is used to indicate an update failure, and further, the update response message may carry a reason for the update failure, to be specific, there is no resource.

It should be understood that, if S1007 is performed, an entire update procedure ends.

Optionally, in S1008, when the reservation result of the EM or the NFVO indicates that a resource has been successfully reserved, the NSM&O sends a modification request message to the EM and/or the NFVO, where the modification request message is used to request to modify another network function dependent on the first network function; and the EM and/or the NFVO receives the modification request message, and modifies a configuration of a related network function.

In S1009, after a dependency network function has been modified, the NSM&O determines whether a second network function exists. Optionally, the NSM&O may query the EM and the NFVO for an allowance status of a current network function, to determine whether a second network function meeting a requirement exists.

In S1010, if the second network function exists and is a virtualized network function, the NSM&O sends a first configuration request message to the NFVO, to request to configure that the second network function provides a service for the first network slice instance; and the NFVO receives the first configuration request message.

In S1011, the NFVO performs configuration based on the first configuration request message, and sends a configuration response message to the NSM&O.

It should be understood that, if the second network function has been configured, S1019 may be directly performed.

Optionally, in S1012, the second network function does not exist and is a virtualized network function, the NSM&O sends a creation request message to the NFVO, to request to create the second network function for the first network slice instance; and the NFVO receives the creation request message.

In S1013, the NFVO creates the second network function based on the creation request message.

In S1014, the NFVO sends an addition request message to the EM, where the addition request message is used to request to add the EM as a management device of the second network function; and the EM receives the addition request message.

In S1015, the NFVO sends a first response message to the NSM&O, where the first response message is used to indicate that the second network function has been created; and the NSM&O receives the first response message.

In S1016, the NSM&O sends a first configuration request message to the EM, to request to configure the second network function; and the EM receives the first configuration request message.

In S1017, the EM performs configuration and sends a configuration response message to the NSM&O.

It should be understood that, if the second network function is a physical network function, S1015 and S1016 may be directly performed to configure the second network function.

In S1018, after configuring the second network function, the NSM&O sends a connection relationship update request message to the EM and the NFVO, to request to update a connection relationship between network functions of the first network slice instance; and the EM and the NFVO receive the connection relationship update request message, and perform configuration update. Optionally, the connection relationship between the network functions may be presented in a form of a diagram.

Specifically, the NSM&O may configure a physical network function or a virtualized network function by using the EM, and configure a virtualized network function by using the NFVO, so that network functions can be connected. Configuration content may include an Internet Protocol (internet protocol, IP) address, a tunnel ID (identity), and the like. This is not limited in this embodiment of this application.

In S1019, the NSM&O sends a second configuration request message to the EM, where the second configuration request message is used to request to configure that the first network function no longer provides a service for the first network slice instance; and the EM receives the second configuration request message and performs configuration.

It should be understood that, if the first network function is a shared network function, the second configuration request message is further used to request to configure that the first network function no longer provides a service for all network slice instances for which the first network function is allowed to be updated. However, this is not limited in this embodiment of this application.

Optionally, in S1020, if the first network function is a virtualized network function, the NSM&O further needs to send the second configuration request message to the NFVO.

It should be understood that, the foregoing steps are described only for a case in which the first network function is a physical network function or a case in which the first network function is a virtualized network function but cannot be deleted. When the first network function is a virtualized network function and can be deleted, the first network function may be deleted by using the following steps, but this is not limited in this embodiment of this application.

Optionally, in S1021, the NSM&O sends a first termination request message to the EM, to request to terminate management of the first network function; and the EM receives the first termination request message sent by the NSM&O.

In S1022, the EM deletes a management object of the first network function based on the first termination request message, and sends a first termination acknowledgment message to the NSM&O; and the NSM&O receives the first termination acknowledgment message.

In S1023, the NSM&O sends a second termination request message to the NFVO based on the first termination acknowledgment message, to request to terminate the first network function; and the NFVO receives the first termination acknowledgment message.

In S1024, the NFVO terminates the first network function.

In S1025, the NFVO sends a second termination acknowledgment message to the NSM&O, and the NSM&O receives the second termination acknowledgment message.

In S1026, the NSM&O sends an update notification message to the storage device, where the update notification message carries updated information of the first network slice instance; and the storage device receives the update notification message.

In S1027, the storage device performs storage based on the update notification message.

In S1028, the storage device sends a storage success message to the NSM&O, and the NSM&O receives the storage success message.

In S1029, the NSM&O sends an update response message to the transmit end, where the update response message is used to indicate an update success; and the transmit end receives the update response message.

It should be understood that, sequence numbers of the foregoing processes do not indicate an execution sequence, and an execution sequence of the processes shall be determined based on functions and internal logic thereof, and shall constitute no limitation on an implementation process of the embodiments of this application.

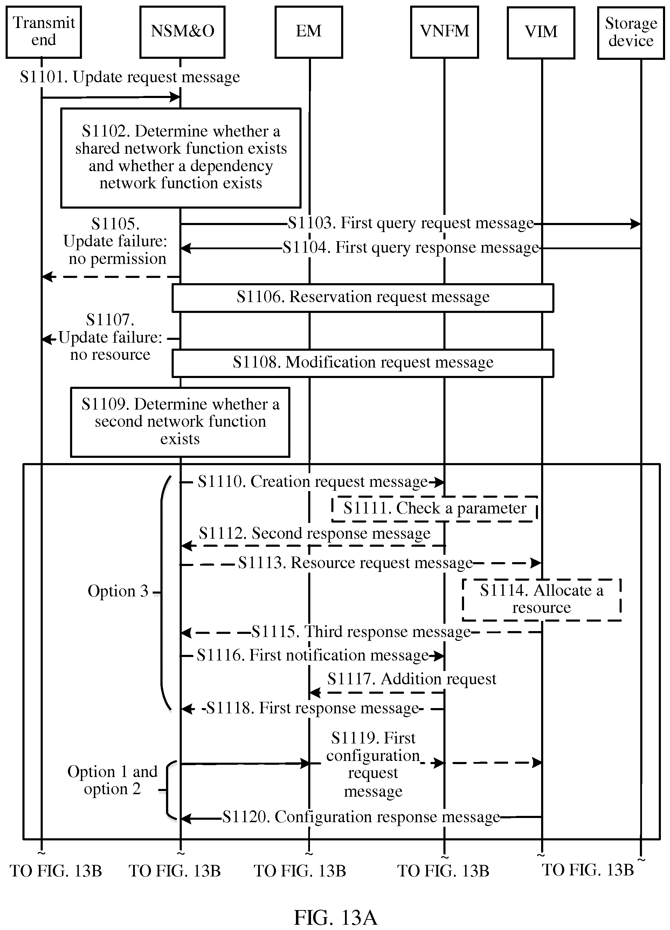

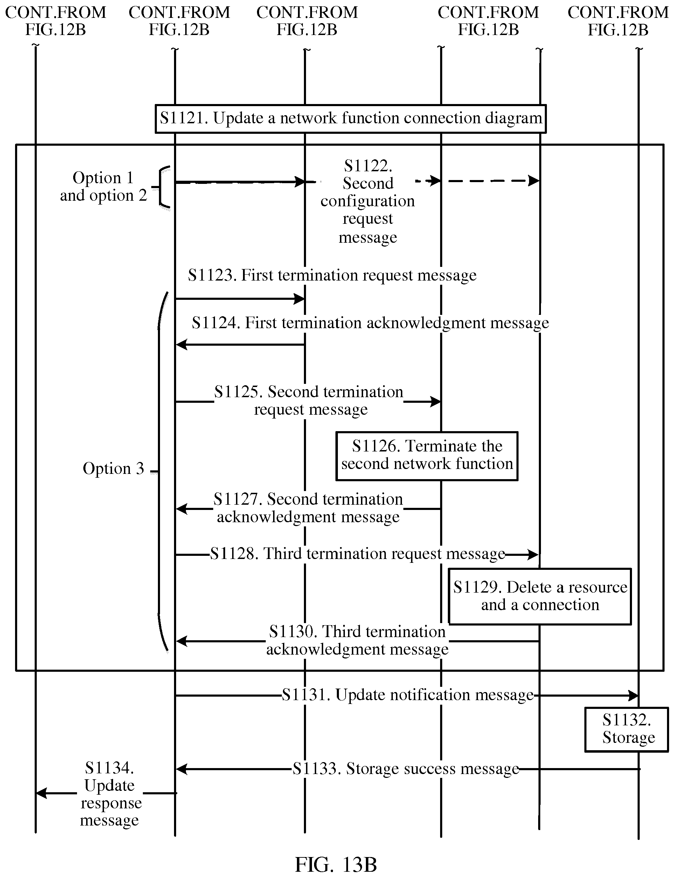

FIG. 13A and FIG. 13B show another method 1100 for managing a network slice instance according to an embodiment of this application. The method 1100 may be applied to the network management architecture 400 shown in FIG. 4, but this is not limited in this embodiment of this application.

It should be understood that, the network management architecture 400 includes no NFVO. Therefore, the NSM&O may directly interact with the VNFM and the VIM. S1101 to S1105 are the same as S 1001 to S1005 in the method 1000, and details are not described herein again.

In S1106, if the second network function is a physical network function, the NSM&O sends a reservation request message to the EM, to request to reserve a physical resource for the second network function; or if the second network function is a virtualized network function, the NSM&O sends a reservation request message to the VIM, to request to reserve a virtual resource for the second network function.

S1107 is the same as S1007. If a reservation failure is determined, an update response message is sent to the transmit end, where the update response message is used to indicate an update failure.

In S1108, the NSM&O sends a modification request message to the EM, the VNFM, and the VIM, where the modification request message is used to request to modify another network function dependent on the first network function.

S1109 is the same as S1009, to check whether the second network function exists.

In S1110, if the second network function does not exist, and the second network function is a virtualized network function, the NSM&O sends a creation request message to the VNFM, to request to create the second network function for the first network slice instance. The VNFM receives the creation request message.

In S1111, the VNFM checks and processes a parameter based on the creation request message.

In S1112, the VNFM sends a second response message to the NSM&O, to indicate that the second network function is allowed to be created; and the NSM&O receives the second response message.

In S1113, the NSM&O sends a resource request message to the VIM, to request the VIM to allocate a resource to the second network function; and the VIM receives the resource request message.

In S1114, the VIM allocates a resource to the second network function based on the resource request message.

In S1115, the VIM sends a third response message to the NSM&O, to indicate that the resource has been allocated; and the NSM&O receives the third response message.

In S1116, the NSM&O sends a first notification message to the VNFM based on the third response message, to inform that the resource has been allocated; and the VNFM receives the first notification message.

In S 1117, the VNFM sends an addition request to the EM based on the first notification message, to request the EM to add a management device for the second network function.

In S1118, the VNFM sends a first response message to the NSM&O, to indicate that the second network function has been created.

In S1119, the NSM&O sends a first configuration request message to the EM, the VNFM, or the VIM, to request to configure the second network function; and the EM, the VNFM, or the VIM receives the first configuration request message and performs configuration.

In S1120, the EM, the VNFM, or the VIM sends a configuration response message to the NSM&O; and the NSM&O receives the configuration response message returned by the EM, the VNFM, or the VIM.

In S1121, the NSM&O sends a connection diagram update request message to the EM, the VNFM, and the VIM, to request to update a connection diagram between network functions of the first network slice instance; and the EM, the VNFM, and the VIM receive the connection diagram update request message, and perform configuration update.

In S1122, if the second network function is a physical network function, the NSM&O sends a second configuration request message to the EM, to request to configure that the second network function no longer provides a service for the first network slice instance; or if the first network function is a virtualized network function but cannot be deleted, the NSM&O sends the second configuration request message to the EM, the VNFM, and the VIM.

Optionally, if the second network function is a virtualized network function and can be deleted, S1123 to S1130 are performed. It should be understood that, in S1123 to S1130, S1123 to S 1127 are the same as S1021 to S1025, and details are not described herein again.

In S 1128, the NSM&O sends a third termination request message to the VIM, where the third termination request message is used to request to delete a connection to the second network function and to release a resource of the second network function; and the VIM receives the third termination request message sent by the NSM&O.

In S1129, the VIM deletes the connection to the second network function based on the third termination request message, and releases the resource of the second network function.

In S1130, the VIM sends a third termination acknowledgment message to the NSM&O, and the NSM&O receives the third termination acknowledgment message.

S 1131 to S 1134 are the same as S 1026 to S1029, and details are not described herein again.

It should be understood that, sequence numbers of the foregoing processes do not indicate an execution sequence, and an execution sequence of the processes shall be determined based on functions and internal logic thereof, and shall constitute no limitation on an implementation process of the embodiments of this application.

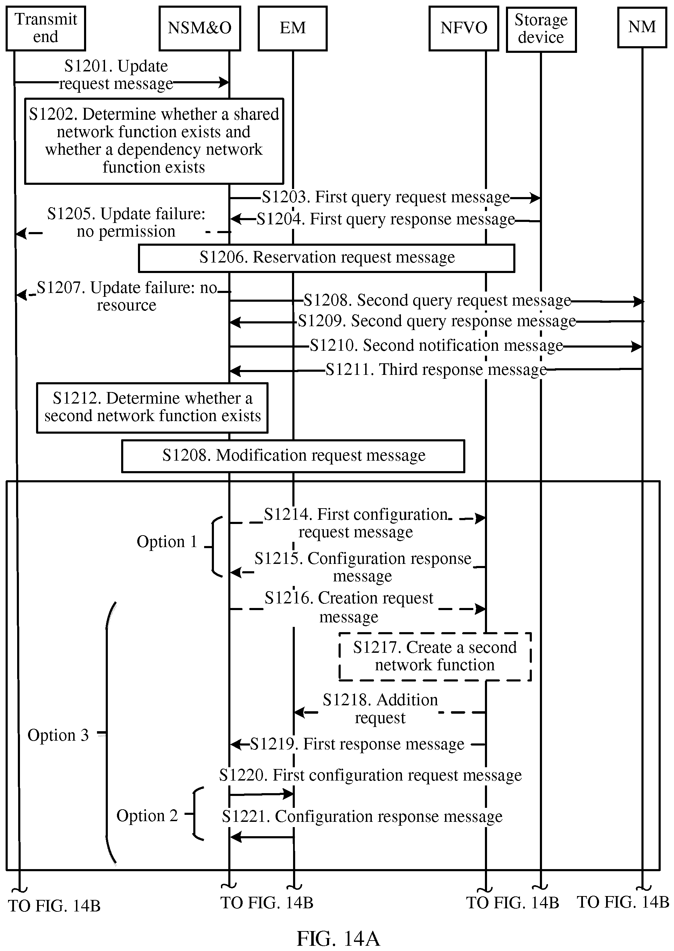

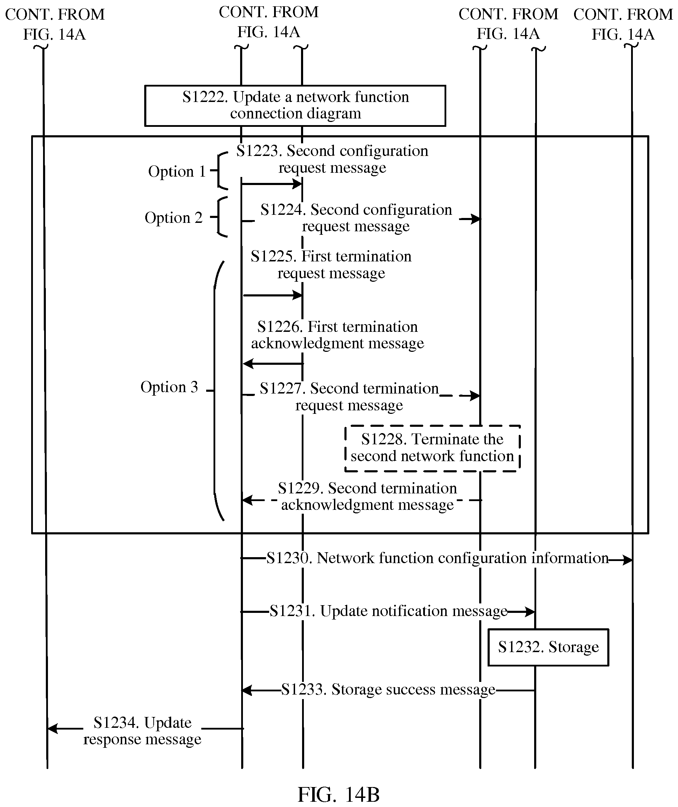

FIG. 14A and FIG. 14B show another method 1200 for managing a network slice instance according to an embodiment of this application. The method 1200 may be applied to the network management architecture 500 shown in FIG. 5, but this is not limited in this embodiment of this application.

It should be understood that, because the network management architecture 500 includes the NM, both the NSM&O and the NM can manage a physical network function and a virtualized network function. Therefore, to avoid a configuration conflict, the NSM&O and the NM need to coordinate. S1201 to S1207 are the same as S1001 to S1007, and details are not described herein again.

In S1208, the NSM&O sends a second query request message to the NM, to request to query an existing virtualized network function; and the NM receives the second query request message.

In S1209, the NM performs query based on the second query request message, and sends a second query response message to the NSM&O, where the second query response message is used to feed back configuration information of the existing virtualized network function; and the NSM&O receives the second query response message.

In S1210, the NSM&O sends a second notification message to the NM based on the second query response message, to inform that the second network function is to be configured; and the NM receives the second notification message.

In S1211, the NM sends a third response message to the NSM&O based on the second notification message, and the NSM&O receives the third response message.

S 1212 to S 1229 are the same as S 1008 to S1025, and details are not described herein again.

In S1230, the NSM&O sends network function configuration information to the NM, where the network function configuration information carries a configuration parameter of the second network function; and the NM receives the network function configuration information.

S 1231 to S 1234 are the same as S 1026 to S1029, and details are not described herein again.

It should be understood that, sequence numbers of the foregoing processes do not indicate an execution sequence, and an execution sequence of the processes shall be determined based on functions and internal logic thereof, and shall constitute no limitation on an implementation process of the embodiments of this application.

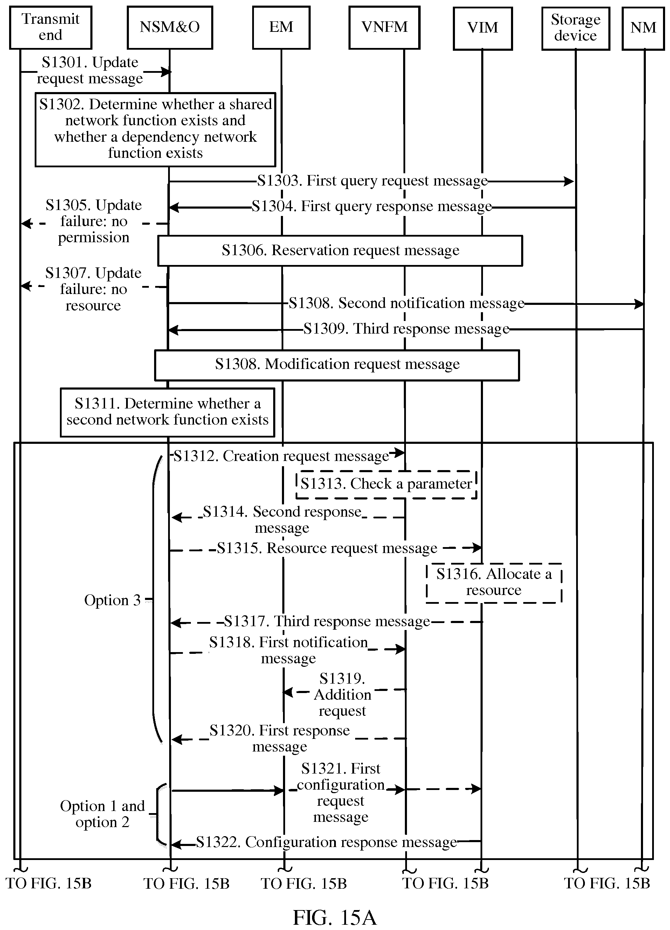

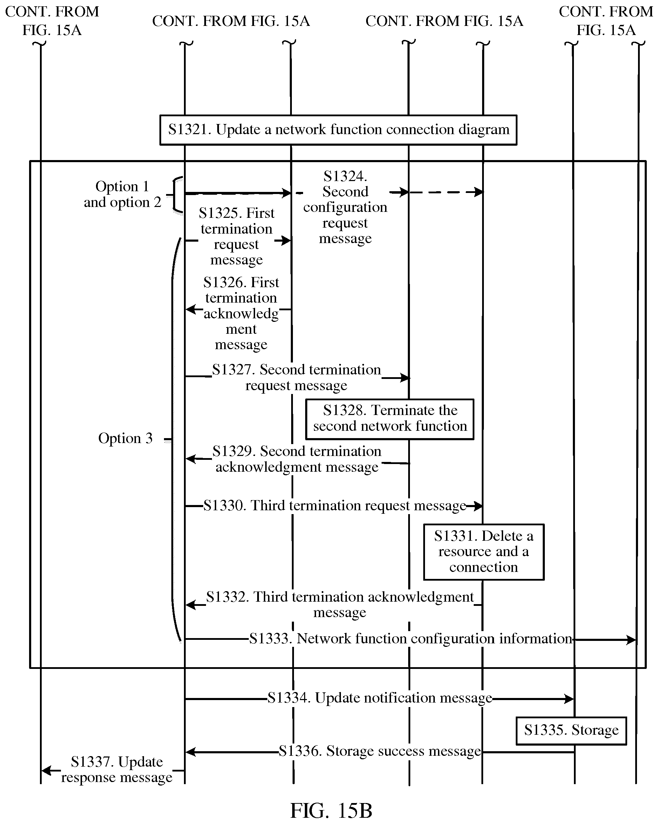

FIG. 15A and FIG. 15B show another method 1300 for managing a network slice instance according to an embodiment of this application. The method 1300 may be applied to the network management architecture 600 shown in FIG. 6, but this is not limited in this embodiment of this application.

S 1301 to S1307 are the same as S1101 to S1107, and details are not described herein again. S1308 and S1309 are the same as S1210 and S1211, and details are not described herein again. S1310 to S1332 are the same as S1108 to S 1130, and details are not described herein again. S1333 to S1337 are the same as S1230 to S 1234, and details are not described herein again.

It should be understood that, sequence numbers of the foregoing processes do not indicate an execution sequence, and an execution sequence of the processes shall be determined based on functions and internal logic thereof, and shall constitute no limitation on an implementation process of the embodiments of this application.

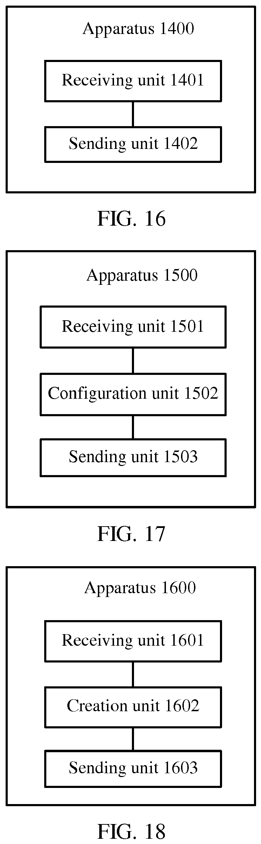

The method for managing a network slice instance according to the embodiments of this application is described in detail above with reference to FIG. 1 to FIG. 15, and an apparatus for managing a network slice instance according to the embodiments of this application is described in detail below with reference to FIG. 16 to FIG. 23.

FIG. 16 shows an apparatus 1400 for managing a network slice instance according to an embodiment of this application. The apparatus 1400 includes:
a receiving unit 1401, configured to receive an update request message sent by a transmit end, where the update request message carries identification information of a first network slice instance, and the update request message is used to request to update a first network function of the first network slice instance to a second network function; and
a sending unit 1402, configured to send a first configuration request message to a second network device based on the update request message, where the first configuration request message is used to request to configure the second network function for the first network slice instance.

The receiving unit 1401 is further configured to receive a configuration response message sent by the second network device based on the first configuration request message, where the configuration response message is used to indicate that the second network function has been configured.

The sending unit 1402 is further configured to send an update response message to the transmit end based on the configuration response message, where the update response message is used to indicate that the first network function has been updated to the second network function.

It should be understood that the apparatus 1400 herein is embodied in the form of functional units. The term "unit" herein may refer to an application-specific integrated circuit (application specific integrated circuit, ASIC), an electronic circuit, a processor configured to execute one or more software or firmware programs (for example, a shared processor, a dedicated processor, or a group processor), a memory, a combined logic circuit, and/or another proper component that supports the described functions. In an optional example, a person skilled in the art may understand that the apparatus 1400 may be the first network device in the foregoing embodiments, and the apparatus 1400 may be configured to perform the procedures and/or steps corresponding to the first network device in the foregoing method embodiments. To avoid repetition, details are not described herein again.

FIG. 17 shows another apparatus 1500 for managing a network slice instance according to an embodiment of this application. The apparatus 1500 includes:
a receiving unit 1501, configured to receive a first configuration request message sent by a first network device, where the first configuration request message is used to request to configure the second network function for the first network slice instance;
a configuration unit 1502, configured to configure the second network function based on the first configuration request message; and
a sending unit 1503, configured to send a configuration response message to the first network device, where the configuration response message is used to indicate that the second network function has been configured.

It should be understood that the apparatus 1500 herein is embodied in the form of functional units. The term "unit" herein may refer to an application-specific integrated circuit (application specific integrated circuit, ASIC), an electronic circuit, a processor configured to execute one or more software or firmware programs (for example, a shared processor, a dedicated processor, or a group processor), a memory, a combined logic circuit, and/or another proper component that supports the described functions. In an optional example, a person skilled in the art may understand that the apparatus 1500 may be the second network device in the foregoing embodiments, and the apparatus 1500 may be configured to perform the procedures and/or steps corresponding to the second network device in the foregoing method embodiments. To avoid repetition, details are not described herein again.

FIG. 18 shows another apparatus 1600 for managing a network slice instance according to an embodiment of this application. The apparatus 1600 includes:
a receiving unit 1601, configured to receive a creation request message sent by a first network device, where the creation request message is used to request to create a second network function, and the creation request message carries a parameter of the second network function;
a creation unit 1602, configured to create the second network function based on the creation request message; and
a sending unit 1603, configured to send a first response message to the first network device, where the first response message is used to indicate that the second network function has been created.

It should be understood that the apparatus 1600 herein is embodied in the form of functional units. The term "unit" herein may refer to an application-specific integrated circuit (application specific integrated circuit, ASIC), an electronic circuit, a processor configured to execute one or more software or firmware programs (for example, a shared processor, a dedicated processor, or a group processor), a memory, a combined logic circuit, and/or another proper component that supports the described functions. In an optional example, a person skilled in the art may understand that the apparatus 1600 may be the third network device in the foregoing embodiments, and the apparatus 1600 may be configured to perform the procedures and/or steps corresponding to the third network device in the foregoing method embodiments. To avoid repetition, details are not described herein again.

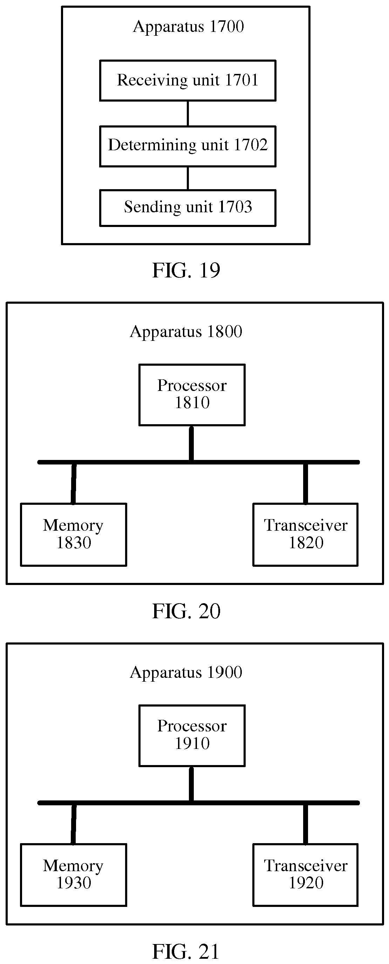

FIG. 19 shows another apparatus 1700 for managing a network slice instance according to an embodiment of this application. The apparatus 1700 includes:
a receiving unit 1701, configured to receive a second notification message sent by a first network device, where the second notification message is used to inform that a second network function of a first network slice instance is to be configured;
a determining unit 1702, configured to determine, based on the second notification message, that the first network device is allowed to configure the first network function; and
a sending unit 1703, configured to send a third response message to the first network device.

It should be understood that the apparatus 1700 herein is embodied in the form of functional units. The term "unit" herein may refer to an application-specific integrated circuit (application specific integrated circuit, ASIC), an electronic circuit, a processor configured to execute one or more software or firmware programs (for example, a shared processor, a dedicated processor, or a group processor), a memory, a combined logic circuit, and/or another proper component that supports the described functions. In an optional example, a person skilled in the art may understand that the apparatus 1700 may be the fifth network device in the foregoing embodiments, and the apparatus 1700 may be configured to perform the procedures and/or steps corresponding to the fifth network device in the foregoing method embodiments. To avoid repetition, details are not described herein again.

FIG. 20 shows another apparatus 1800 for managing a network slice instance according to an embodiment of this application. The apparatus 1800 includes a processor 1810, a transceiver 1820, a memory 1830, and a bus system 1840. The processor 1810, the transceiver 1820, and the memory 1830 are connected to each other by using the bus system 1840. The memory 1830 is configured to store an instruction. The processor 1810 is configured to execute the instruction stored in the memory 1830, to control the transceiver 1820 to send a signal and/or receive a signal.

The transceiver 1820 is configured to receive an update request message sent by a transmit end, where the update request message carries identification information of a first network slice instance, and the update request message is used to request to update a first network function of the first network slice instance to a second network function; send a first configuration request message to a second network device based on the update request message received by the transceiver, where the first configuration request message is used to request to configure the second network function for the first network slice instance; receive, by using the transceiver, a configuration response message sent by the second network device based on the first configuration request message, where the configuration response message is used to indicate that the second network function has been configured; and send an update response message to the transmit end based on the configuration response message received by the transceiver, where the update response message is used to indicate that the first network function has been updated to the second network function.

It should be understood that the apparatus 1800 may be specifically the first network device in the foregoing embodiments, and may be configured to perform the steps and/or procedures corresponding to the first network device in the foregoing method embodiments. Optionally, the memory 1830 may include a read-only memory and a random access memory, and provide an instruction and data to the processor. Apart of the memory may further include a non-volatile random access memory. For example, the memory may further store device type information. The processor 1810 may be configured to execute the instruction stored in the memory, and when the processor 1810 executes the instruction stored in the memory, the processor 1810 is configured to perform steps and/or procedures of the method embodiment corresponding to the first network device.

FIG. 21 shows another apparatus 1900 for managing a network slice instance according to an embodiment of this application. The apparatus 1900 includes a processor 1910, a transceiver 1920, a memory 1930, and a bus system 1940. The processor 1910, the transceiver 1920, and the memory 1930 are connected to each other by using the bus system 1940. The memory 1930 is configured to store an instruction. The processor 1910 is configured to execute the instruction stored in the memory 1930, to control the transceiver 1920 to send a signal and/or receive a signal.

The transceiver 1920 is configured to receive a first configuration request message sent by a first network device, where the first configuration request message is used to request to configure the second network function for the first network slice instance. The processor 1910 is configured to configure the second network function based on the first configuration request message received by the transceiver 1920. The transceiver 1920 is further configured to send a configuration response message to the first network device, where the configuration response message is used to indicate that the second network function has been configured.

It should be understood that the apparatus 1900 may be specifically the second network device in the foregoing embodiments, and may be configured to perform the steps and/or procedures corresponding to the second network device in the foregoing method embodiments. Optionally, the memory 1930 may include a read-only memory and a random access memory, and provide an instruction and data to the processor. Apart of the memory may further include a non-volatile random access memory. For example, the memory may further store device type information. The processor 1910 may be configured to execute the instruction stored in the memory, and when the processor 1310 executes the instruction stored in the memory, the processor 1310 is configured to perform steps and/or procedures of the method embodiment corresponding to the second network device.

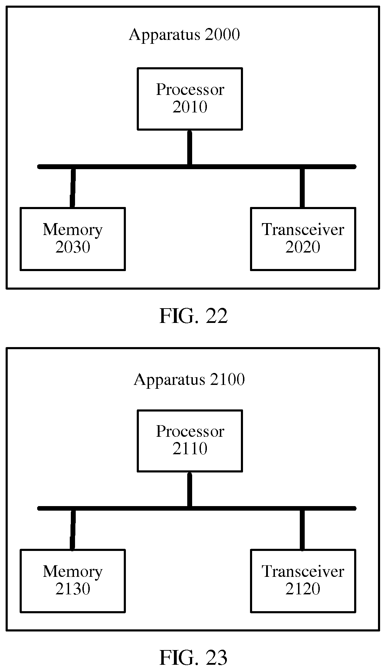

FIG. 22 shows another apparatus 2000 for managing a network slice instance according to an embodiment of this application. The apparatus 2000 includes a processor 2010, a transceiver 2020, a memory 2030, and a bus system 2040. The processor 2010, the transceiver 2020, and the memory 2030 are connected to each other by using the bus system 2040. The memory 2030 is configured to store an instruction. The processor 2010 is configured to execute the instruction stored in the memory 2030, to control the transceiver 2020 to send a signal and/or receive a signal.

The transceiver 2020 is configured to receive a creation request message sent by a first network device, where the creation request message is used to request to create a second network function, and the creation request message carries a parameter of the second network function. The processor 2010 is configured to create the second network function based on the creation request message. The transceiver 2020 is further configured to send a first response message to the first network device, where the first response message is used to indicate that the second network function has been created.

It should be understood that the apparatus 2000 may be specifically the third network device in the foregoing embodiments, and may be configured to perform steps and/or procedures corresponding to the third network device in the foregoing method embodiments. Optionally, the memory 2030 may include a read-only memory and a random access memory, and provide an instruction and data to the processor. Apart of the memory may further include a non-volatile random access memory. For example, the memory may further store device type information. The processor 2010 may be configured to execute the instruction stored in the memory, and when the processor 1310 executes the instruction stored in the memory, the processor 1310 is configured to perform steps and/or procedures in the method embodiment corresponding to the third network device.

FIG. 23 shows another apparatus 2100 for managing a network slice instance according to an embodiment of this application. The apparatus 2100 includes a processor 2110, a transceiver 2120, a memory 2130, and a bus system 2140. The processor 2110, the transceiver 2120, and the memory 2130 are connected to each other by using the bus system 2140. The memory 2130 is configured to store an instruction. The processor 2110 is configured to execute the instruction stored in the memory 2130, to control the transceiver 2120 to send a signal and/or receive a signal.

The transceiver 2120 is configured to receive a second notification message sent by a first network device, where the second notification message is used to inform that a second network function of a first network slice instance is to be configured. The processor 2110 is configured to determine, based on the second notification message, that the first network device is allowed to configure the first network function. The transceiver 2120 is further configured to send a third response message to the first network device.

It should be understood that the apparatus 2100 may be specifically the fifth network device in the foregoing embodiments, and may be configured to perform the steps and/or procedures corresponding to the fifth network device in the foregoing method embodiments. Optionally, the memory 2130 may include a read-only memory and a random access memory, and provide an instruction and data to the processor. Apart of the memory may further include a non-volatile random access memory. For example, the memory may further store device type information. The processor 2110 may be configured to execute the instruction stored in the memory, and when the processor 1310 executes the instruction stored in the memory, the processor 1310 is configured to perform steps and/or procedures of the method embodiment corresponding to the fifth network device.

It should be understood that, in the embodiments of this application, the processor in the foregoing apparatus may be a central processing unit (central processing unit, CPU), the processor may be another general-purpose processor, a digital signal processor (DSP), an application-specific integrated circuit (ASIC), a field programmable gate array (FPGA), or another programmable logic device, a discrete gate, a transistor logic device, a discrete hardware component, or the like. The general-purpose processor may be a microprocessor or the processor may be any conventional processor or the like.

In an implementation process, steps in the foregoing methods can be implemented by using a hardware integrated logic circuit in the processor, or by using instructions in a form of software. The steps of the method disclosed with reference to the embodiments of this application may be directly performed by a hardware processor, or may be performed by using a combination of hardware in the processor and a software unit. A software unit may be located in a mature storage medium in the art, such as a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces, indirect couplings or communication connections between the apparatuses or units, electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of the embodiments of this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In addition, the function units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application which is defined by the appended claims.

## Claims

1. A method for managing a network slice instance, comprising:
receiving (S1001), by a first network device, an update request message sent by a transmit end, wherein the update request message carries identification information of a first network slice instance, and the update request message is used to request to update a first network function of the first network slice instance to a second network function;
sending (S1016), by the first network device, a first configuration request message to a second network device based on the update request message, wherein the first configuration request message is used to request to configure the second network function for the first network slice instance;
receiving (S1017), by the first network device, a configuration response message sent by the second network device based on the first configuration request message, wherein the configuration response message is used to indicate that the second network function has been configured; and
sending (S1029), by the first network device, an update response message to the transmit end based on the configuration response message, wherein the update response message is used to indicate that the first network function has been updated to the second network function;
wherein before the sending, by the first network device, a first configuration request message to a second network device based on the update request message, the method further comprises:
sending (S1012), by the first network device, a creation request message to a third network device when no available second network function exists and the second network function is a virtualized network function, wherein the creation request message is used to request to create the second network function, and the creation request message carries a parameter of the second network function; and
receiving (S1015), by the first network device, a first response message sent by the third network device based on the creation request message, wherein the first response message is used to indicate that the second network function has been created; and
the sending, by the first network device, a first configuration request message to a second network device based on the update request message comprises:
sending, by the first network device, the first configuration request message to the second network device based on the first response message.

2. The method according to claim 1, wherein before the sending, by the first network device, a first configuration request message to a second network device based on the update request message, the method further comprises:
determining, by the first network device when the first network function is a shared network function, at least one second network slice instance sharing the first network function with the first network slice instance; and
the sending, by the first network device, a first configuration request message to a second network device based on the update request message comprises:
sending, by the first network device, the first configuration request message to the second network device when the first network function is allowed to be updated to the second network function for all or some of the at least one second network slice instance, wherein the configuration request message is further used to request to configure the second network function for the all or some second network slice instances for which the first network function is allowed to be updated.

3. The method according to claim 1 or 2, wherein before the sending, by the first network device, a first configuration request message to a second network device based on the update request message, the method further comprises:
sending (S1208), by the first network device, a modification request message to at least one of the second network device, the third network device, and a fourth network device when a third network function dependent on the first network function exists in the first network slice instance, wherein the modification request message is used to request to modify the third network function.

4. The method according to claim 3, wherein before the sending (S1208), by the first network device, a modification request message to at least one of the second network device, the third network device, and a fourth network device, the method further comprises:
determining (S1202), by the first network device when the third network function is a shared network function, at least one third network slice instance sharing the third network function; and
the sending (S1208), by the first network device, a modification request message to at least one of the second network device, the third network device, and a fourth network device comprises:
sending, by the first network device, the modification request message to at least one of the second network device, the third network device, and the fourth network device when the third network function is allowed to be modified for all of the at least one third network slice instance.

5. The method according to any of claims 1 to 4, wherein before the receiving, by the first network device, a first response message sent by the third network device based on the creation request message, the method further comprises:
receiving (S1112), by the first network device, a second response message sent by the third network device based on the creation request message, wherein the second response message is used to indicate that the second network function is allowed to be created;
sending (S1113), by the first network device, a resource request message to the fourth network device based on the second response message, wherein the resource request message is used to request to allocate a resource to the second network function;
receiving (S1115), by the first network device, a third response message sent by the fourth network device based on the resource request message, wherein the third response message is used to indicate that the resource has been allocated to the second network function; and
sending (S116), by the first network device, a first notification message to the third network device, wherein the first notification message is used to inform that the resource has been allocated to the second network function; and
the receiving (S1118), by the first network device, a first response message sent by the third network device based on the creation request message comprises:
receiving, by the first network device, the first response message sent by the third network device based on the first notification message.

6. The method according to any one of claims 1 to 5, wherein after the first network device updates the first network function to the second network function, the method further comprises:
deleting, by the first network device, the first network function for the first network slice instance.

7. The method according to claim 6, wherein the deleting, by the first network device, the first network function for the first network slice instance comprises:
sending, by the first network device, a third configuration request message to at least one of the second network device, the third network device, and the fourth network device if the first network function is a shared network function, and the first network function is not allowed to be updated for at least one second network slice instance sharing the first network function, wherein the third configuration request message is used to request to configure that the first network function no longer provides a service for a network slice instance for which the first network function is allowed to be updated; or
sending, by the first network device, a fourth configuration request message to at least one of the second network device, the third network device, and the fourth network device if the first network function is a virtualized network function and the first network function is generated by a fifth network device, wherein the fourth configuration request message is used to request to configure that the first network function no longer provides a service for a network slice instance for which the first network function is allowed to be updated.

8. The method according to claim 6, wherein the deleting, by the first network device, the first network function for the first network slice instance comprises:
if the first network function is a virtualized network function, the first network function is a shared network function, the first network function is allowed to be updated for all second network slice instances sharing the first network function, and the first network function is not generated by a network manager, sending (S1123), by the first network device, a first termination request message to the second network device, wherein the first termination request message is used to request to terminate management of the first network function;
receiving (S1124), by the first network device, a first termination acknowledgment message sent by the second network device based on the first termination request message;
sending (S 1125), by the first network device, a second termination request message to the third network device based on the first termination acknowledgment message, wherein the second termination request message is used to request to terminate the first network function; and
receiving (S1127), by the first network device, a second termination acknowledgment message sent by the third network device based on the second termination request message.

9. The method according to any one of claims 1 to 8, wherein before the sending, by the first network device, a first configuration request message to a second network device based on the update request message, the method further comprises:
sending (S1006), by the first network device, a reservation request message to the second network device or the fourth network device based on the update request message, wherein the reservation request message is used to request to reserve a resource for the second network function; and
receiving, by the first network device, a reservation response message sent by the second network device or the fourth network device based on the reservation request message, wherein the reservation response message is used to indicate whether the resource has been successfully reserved for the second network function; and
the sending, by the first network device, a first configuration request message to a second network device based on the update request message comprises:
sending, by the first network device, the first configuration request message to the second network device based on the update request message when the reservation response message indicates that the resource has been successfully reserved for the second network function.

10. The method according to any one of claims 1 to 9, wherein before the sending, by the first network device, a first configuration request message to a second network device based on the update request message, the method further comprises:
sending (S1103), by the first network device, a first query request message to a storage device, wherein the first query request message is used to query validity of the update request message, and the first query request message carries an identifier of the transmit end; and
receiving (S1104), by the first network device, a first query response message sent by the storage device based on the first query request message, wherein the first query response message is used to indicate whether the update request message is valid; and
the sending, by the first network device, a first configuration request message to a second network device based on the update request message comprises:
sending, by the first network device, the first configuration request message to the second network device when the update request message is valid.

11. The method according to any one of claims 1 to 10, wherein after the receiving, by the first network device, a configuration response message sent by the second network device based on the first configuration request message, the method further comprises:
sending (S1131), by the first network device, an update notification message to the storage device, wherein the update notification message carries updated information of the first network slice instance; and
receiving (S1133), by the first network device, a storage success message sent by the storage device based on the update notification message.

12. An apparatus (1800) for managing a network slice instance, comprising:
a transceiver (1820);a memory (1830), configured to store an instruction; and
a processor (1810), connected to the memory (1830) and the transceiver (1820), and configured to execute the instruction stored in the memory, to perform the following steps when executing the instruction:
receiving, by using the transceiver (1820), an update request message sent by a transmit end, wherein the update request message carries identification information of a first network slice instance, and the update request message is used to request to update a first network function of the first network slice instance to a second network function;
sending a first configuration request message to a second network device based on the update request message received by the transceiver (1820), wherein the first configuration request message is used to request to configure the second network function for the first network slice instance;
receiving, by using the transceiver (1820), a configuration response message sent by the second network device based on the first configuration request message, wherein the configuration response message is used to indicate that the second network function has been configured; and
sending an update response message to the transmit end based on the configuration response message received by the transceiver (1820), wherein the update response message is used to indicate that the first network function has been updated to the second network function;
wherein the transceiver (1820) is specifically configured to:
before sending the first configuration request message to the second network device based on the update request message received by the transceiver (1820), send a creation request message to a third network device when no available second network function exists and the second network function is a virtualized network function, wherein the creation request message is used to request to create the second network function, and the creation request message carries a parameter of the second network function;
receive a first response message sent by the third network device based on the creation request message, wherein the first response message is used to indicate that the second network function has been created; and
send the first configuration request message to the second network device based on the first response message.

13. The apparatus (1800) according to claim 12, wherein the processor (1810) is specifically configured to:
before the first configuration request message is sent to the second network device based on the update request message received by the transceiver (1820), determine, when the first network function is a shared network function, at least one second network slice instance sharing the first network function with the first network slice instance; and
the transceiver (1820) is specifically configured to:
send the first configuration request message to the second network device when the first network function is allowed to be updated to the second network function for all or some of the at least one second network slice instance, wherein the configuration request message is further used to request to configure the second network function for the all or some second network slice instances for which the first network function is allowed to be updated.

14. The apparatus (1800) according to claim 12 or 13, wherein the transceiver (1820) is specifically configured to:
before sending the first configuration request message to the second network device based on the update request message received by the transceiver (1820), send a modification request message to at least one of the second network device, the third network device, and a fourth network device when a third network function dependent on the first network function exists in the first network slice instance, wherein the modification request message is used to request to modify the third network function.

## Patentansprüche

1. Verfahren zum Verwalten einer Netzwerkschichtinstanz, umfassend:
Empfangen (S1001), durch eine erste Netzwerkvorrichtung, einer Aktualisierungsanforderungsnachricht, die von einer Sendeseite gesendet wird, wobei die Aktualisierungsanforderungsnachricht Identifikationsinformationen einer ersten Netzwerkschichtinstanz trägt und die Aktualisierungsanforderungsnachricht für die Anforderung verwendet wird, eine erste Netzwerkfunktion der ersten Netzwerkschichtinstanz auf eine zweite Netzwerkfunktion zu aktualisieren;
Senden (S 1016), durch die erste Netzwerkvorrichtung, einer ersten Auslegungsanforderungsnachricht an eine zweite Netzwerkvorrichtung basierend auf der Aktualisierungsanforderungsnachricht, wobei die erste Auslegungsanforderungsnachricht für die Anforderung verwendet wird, die zweite Netzwerkfunktion für die erste Netzwerkschichtinstanz auszulegen;
Empfangen (S1017), durch die erste Netzwerkvorrichtung, einer Auslegungsantwortnachricht, die von der zweiten Netzwerkvorrichtung basierend auf der ersten Auslegungsanforderungsnachricht gesendet wird, wobei die Auslegungsantwortnachricht verwendet wird, um anzuzeigen, dass die zweite Netzwerkfunktion ausgelegt wurde; und
Senden (S 1029), durch die erste Netzwerkvorrichtung, einer Aktualisierungsantwortnachricht an die Sendeseite, basierend auf der Auslegungsantwortnachricht, wobei die Aktualisierungsantwortnachricht verwendet wird, um anzuzeigen, dass die erste Netzwerkfunktion auf die zweite Netzwerkfunktion aktualisiert wurde;
wobei das Verfahren vor dem Senden, durch die erste Netzwerkvorrichtung, einer ersten Auslegungsanforderungsnachricht an eine zweite Netzwerkvorrichtung basierend auf der Aktualisierungsanforderungsnachricht ferner umfasst:
Senden (S 1012), durch die erste Netzwerkvorrichtung, einer Erzeugungsanforderungsnachricht an eine dritte Netzwerkvorrichtung, wenn keine verfügbare zweite Netzwerkfunktion vorhanden ist und die zweite Netzwerkfunktion eine virtualisierte Netzwerkfunktion ist, wobei die Erzeugungsanforderungsnachricht verwendet wird, um die Erzeugung der zweiten Netzwerkfunktion anzufordern, und die Erzeugungsanforderungsnachricht einen Parameter der zweiten Netzwerkfunktion trägt; und
Empfangen (S1015), durch die erste Netzwerkvorrichtung, einer ersten Antwortnachricht, die durch die dritte Netzwerkvorrichtung gesendet wird, basierend auf der Erzeugungsanforderungsnachricht, wobei die erste Antwortnachricht verwendet wird, um anzuzeigen, dass die zweite Netzwerkfunktion erzeugt wurde; und
das Senden, durch die erste Netzwerkvorrichtung, einer ersten Auslegungsanforderungsnachricht an eine zweite Netzwerkvorrichtung basierend auf der Aktualisierungsanforderungsnachricht umfasst:
Senden, durch die erste Netzwerkvorrichtung, der ersten Auslegungsanforderungsnachricht an die zweite Netzwerkvorrichtung basierend auf der ersten Antwortnachricht.

2. Verfahren nach Anspruch 1, wobei das Verfahren vor dem Senden, durch die erste Netzwerkvorrichtung, einer ersten Auslegungsanforderungsnachricht an eine zweite Netzwerkvorrichtung basierend auf der Aktualisierungsanforderungsnachricht ferner umfasst:
Bestimmen, durch die erste Netzwerkvorrichtung, wenn die erste Netzwerkfunktion eine gemeinsam genutzte Netzwerkfunktion ist, mindestens einer zweiten Netzwerkschichtinstanz, die die erste Netzwerkfunktion mit der ersten Netzwerkschichtinstanz gemeinsam nutzt; und
das Senden, durch die erste Netzwerkvorrichtung, einer ersten Auslegungsanforderungsnachricht an eine zweite Netzwerkvorrichtung basierend auf der Aktualisierungsanforderungsnachricht umfasst:
Senden, durch die erste Netzwerkvorrichtung, der ersten Auslegungsanforderungsnachricht an die zweite Netzwerkvorrichtung, wenn die erste Netzwerkfunktion auf die zweite Netzwerkfunktion für alle oder einige der mindestens einen zweiten Netzwerkschichtinstanz aktualisiert werden darf, wobei die Auslegungsanforderungsnachricht ferner verwendet wird, um die Auslegung der zweiten Netzwerkfunktion für die allen oder die einigen zweiten Netzwerkschichtinstanzen anzufordern, für die die erste Netzwerkfunktion aktualisiert werden darf.

3. Verfahren nach Anspruch 1 oder 2, wobei das Verfahren vor dem Senden, durch die erste Netzwerkvorrichtung, einer ersten Auslegungsanforderungsnachricht an eine zweite Netzwerkvorrichtung basierend auf der Aktualisierungsanforderungsnachricht ferner umfasst:
Senden (S 1208), durch die erste Netzwerkvorrichtung, einer Modifikationsanforderungsnachricht an mindestens eine von der zweiten Netzwerkvorrichtung, der dritten Netzwerkvorrichtung und einer vierten Netzwerkvorrichtung, wenn eine dritte Netzwerkfunktion, die von der ersten Netzwerkfunktion abhängt, in der ersten Netzwerkschichtinstanz vorhanden ist, wobei die Modifikationsanforderungsnachricht verwendet wird, um eine Modifikation der dritten Netzwerkfunktion anzufordern.

4. Verfahren nach Anspruch 3, wobei das Verfahren vor dem Senden (S1208), durch die erste Netzwerkvorrichtung, einer Modifikationsanforderungsnachricht an mindestens eine von der zweiten Netzwerkvorrichtung, der dritten Netzwerkvorrichtung und einer vierten Netzwerkvorrichtung ferner umfasst:
Bestimmen (S1202), durch die erste Netzwerkvorrichtung, wenn die dritte Netzwerkfunktion eine gemeinsam genutzte Netzwerkfunktion ist, mindestens einer dritten Netzwerkschichtinstanz, die die dritte Netzwerkfunktion gemeinsam nutzt; und
das Senden (S1208), durch die erste Netzwerkvorrichtung, einer Modifikationsanforderungsnachricht an mindestens eine von der zweiten Netzwerkvorrichtung, der dritten Netzwerkvorrichtung und einer vierten Netzwerkvorrichtung umfasst:
Senden, durch die erste Netzwerkvorrichtung, der Modifikationsanforderungsnachricht an mindestens eine von der zweiten Netzwerkvorrichtung, der dritten Netzwerkvorrichtung und der vierten Netzwerkvorrichtung, wenn die dritte Netzwerkfunktion für alle der mindestens einen dritten Netzwerkschichtinstanz modifiziert werden darf.

5. Verfahren nach einem der Ansprüche 1 bis 4, wobei das Verfahren vor dem Empfangen, durch die erste Netzwerkvorrichtung, einer ersten Antwortnachricht, die von der dritten Netzwerkvorrichtung basierend auf der Erzeugungsanforderungsnachricht gesendet wird, ferner umfasst:
Empfangen (S1112), durch die erste Netzwerkvorrichtung, einer zweiten Antwortnachricht, die durch die dritte Netzwerkvorrichtung gesendet wird, basierend auf der Erzeugungsanforderungsnachricht, wobei die zweite Antwortnachricht verwendet wird, um anzuzeigen, dass die zweite Netzwerkfunktion erzeugt werden darf;
Senden (S1113), durch die erste Netzwerkvorrichtung, einer Ressourcenanforderungsnachricht an die vierte Netzwerkvorrichtung basierend auf der zweiten Antwortnachricht, wobei die Ressourcenanforderungsnachricht verwendet wird, um die Zuweisung einer Ressource an die zweite Netzwerkfunktion anzufordern;
Empfangen (S1115), durch die erste Netzwerkvorrichtung, einer dritten Antwortnachricht, die durch die vierte Netzwerkvorrichtung gesendet wird, basierend auf der Ressourcenanforderungsnachricht, wobei die dritte Antwortnachricht verwendet wird, um anzuzeigen, dass die Ressource der zweiten Netzwerkfunktion zugewiesen wurde; und
Senden (S1116), durch die erste Netzwerkvorrichtung, einer ersten Mitteilungsnachricht an die dritte Netzwerkvorrichtung, wobei die erste Mitteilungsnachricht verwendet wird, um darüber zu informieren, dass die Ressource der zweiten Netzwerkfunktion zugewiesen wurde; und
das Empfangen (S1118), durch die erste Netzwerkvorrichtung, einer ersten Antwortnachricht, die von der dritten Netzwerkvorrichtung basierend auf der Erzeugungsanforderungsnachricht gesendet wird, umfasst:
Empfangen, durch die erste Netzwerkvorrichtung, der ersten Antwortnachricht, die von der dritten Netzwerkvorrichtung basierend auf der ersten Mitteilungsnachricht gesendet wird.

6. Verfahren nach einem der Ansprüche 1 bis 5, wobei das Verfahren, nachdem die erste Netzwerkvorrichtung die erste Netzwerkfunktion auf die zweite Netzwerkfunktion aktualisiert hat, ferner umfasst:
Löschen, durch die erste Netzwerkvorrichtung, der ersten Netzwerkfunktion für die erste Netzwerkschichtinstanz.

7. Verfahren nach Anspruch 6, wobei das Löschen, durch die erste Netzwerkvorrichtung, der ersten Netzwerkfunktion für die erste Netzwerkschichtinstanz umfasst:
Senden, durch die erste Netzwerkvorrichtung, einer dritten Auslegungsanforderungsnachricht an mindestens eine von der zweiten Netzwerkvorrichtung, der dritten Netzwerkvorrichtung und der vierten Netzwerkvorrichtung, wenn die erste Netzwerkfunktion eine gemeinsam genutzte Netzwerkfunktion ist und die erste Netzwerkfunktion für mindestens eine zweite Netzwerkschichtinstanz, die die erste Netzwerkfunktion gemeinsam nutzt, nicht aktualisiert werden darf, wobei die dritte Auslegungsanforderungsnachricht verwendet wird, um die Auslegung anzufordern, dass die erste Netzwerkfunktion keinen Dienst mehr für eine Netzwerkschichtinstanz bereitstellt, für die die erste Netzwerkfunktion aktualisiert werden darf; oder
Senden, durch die erste Netzwerkvorrichtung, einer vierten Auslegungsanforderungsnachricht an mindestens eine von der zweiten Netzwerkvorrichtung, der dritten Netzwerkvorrichtung und der vierten Netzwerkvorrichtung, wenn die erste Netzwerkfunktion eine virtualisierte Netzwerkfunktion ist und die erste Netzwerkfunktion durch eine fünfte Netzwerkvorrichtung erzeugt wird, wobei die vierte Auslegungsanforderungsnachricht verwendet wird, um die Auslegung anzufordern, dass die erste Netzwerkfunktion keinen Dienst mehr für eine Netzwerkschichtinstanz bereitstellt, für die die erste Netzwerkfunktion aktualisiert werden darf.

8. Verfahren nach Anspruch 6, wobei das Löschen, durch die erste Netzwerkvorrichtung, der ersten Netzwerkfunktion für die erste Netzwerkschichtinstanz umfasst:
wenn die erste Netzwerkfunktion eine virtualisierte Netzwerkfunktion ist, die erste Netzwerkfunktion eine gemeinsam genutzte Netzwerkfunktion ist, die erste Netzwerkfunktion für alle zweiten Netzwerkschichtinstanzen, die die erste Netzwerkfunktion gemeinsam nutzen, aktualisiert werden darf, und die erste Netzwerkfunktion nicht von einem Netzwerkverwalter erzeugt wird, Senden (S1123), durch die erste Netzwerkvorrichtung, einer ersten Beendigungsanforderungsnachricht an die zweite Netzwerkvorrichtung, wobei die erste Beendigungsanforderungsnachricht verwendet wird, um eine Beendigung der Verwaltung der ersten Netzwerkfunktion anzufordern;
Empfangen (S1124), durch die erste Netzwerkvorrichtung, einer ersten Beendigungsbestätigungsnachricht, die von der zweiten Netzwerkvorrichtung basierend auf der ersten Beendigungsanforderungsnachricht gesendet wird;
Senden (S1125), durch die erste Netzwerkvorrichtung, einer zweiten Beendigungsanforderungsnachricht an die dritte Netzwerkvorrichtung basierend auf der ersten Beendigungsbestätigungsnachricht, wobei die zweite Beendigungsanforderungsnachricht verwendet wird, um die Beendigung der ersten Netzwerkfunktion anzufordern; und
Empfangen (S1127), durch die erste Netzwerkvorrichtung, einer zweiten Beendigungsbestätigungsnachricht, die von der dritten Netzwerkvorrichtung basierend auf der zweiten Beendigungsanforderungsnachricht gesendet wird.

9. Verfahren nach einem der Ansprüche 1 bis 8, wobei das Verfahren vor dem Senden, durch die erste Netzwerkvorrichtung, einer ersten Auslegungsanforderungsnachricht an eine zweite Netzwerkvorrichtung basierend auf der Aktualisierungsanforderungsnachricht ferner umfasst:
Senden (S1006), durch die erste Netzwerkvorrichtung, einer Reservierungsanforderungsnachricht an die zweite Netzwerkvorrichtung oder die vierte Netzwerkvorrichtung basierend auf der Aktualisierungsanforderungsnachricht, wobei die Reservierungsanforderungsnachricht verwendet wird, um die Reservierung einer Ressource für die zweite Netzwerkfunktion anzufordern; und
Empfangen, durch die erste Netzwerkvorrichtung, einer Reservierungsantwortnachricht, die von der zweiten Netzwerkvorrichtung oder der vierten Netzwerkvorrichtung gesendet wird, basierend auf der Reservierungsanforderungsnachricht, wobei die Reservierungsantwortnachricht verwendet wird, um anzuzeigen, ob die Ressource erfolgreich für die zweite Netzwerkfunktion reserviert wurde; und
das Senden, durch die erste Netzwerkvorrichtung, einer ersten Auslegungsanforderungsnachricht an eine zweite Netzwerkvorrichtung basierend auf der Aktualisierungsanforderungsnachricht umfasst:
Senden, durch die erste Netzwerkvorrichtung, der ersten Auslegungsanforderungsnachricht an die zweite Netzwerkvorrichtung basierend auf der Aktualisierungsanforderungsnachricht, wenn die Reservierungsantwortnachricht anzeigt, dass die Ressource erfolgreich für die zweite Netzwerkfunktion reserviert wurde.

10. Verfahren nach einem der Ansprüche 1 bis 9, wobei das Verfahren vor dem Senden, durch die erste Netzwerkvorrichtung, einer ersten Auslegungsanforderungsnachricht an eine zweite Netzwerkvorrichtung basierend auf der Aktualisierungsanforderungsnachricht ferner umfasst:
Senden (S1103), durch die erste Netzwerkvorrichtung, einer ersten Abfrageanforderungsnachricht an eine Speichervorrichtung, wobei die erste Abfrageanforderungsnachricht verwendet wird, um die Gültigkeit der Aktualisierungsanforderungsnachricht abzufragen, und die erste Abfrageanforderungsnachricht eine Kennung der Sendeseite trägt; und
Empfangen (S1104), durch die erste Netzwerkvorrichtung, einer ersten Abfrageantwortnachricht, die von der Speichervorrichtung basierend auf der ersten Abfrageanforderungsnachricht gesendet wird, wobei die erste Abfrageantwortnachricht verwendet wird, um anzuzeigen, ob die Aktualisierungsanforderungsnachricht gültig ist; und
das Senden, durch die erste Netzwerkvorrichtung, einer ersten Auslegungsanforderungsnachricht an eine zweite Netzwerkvorrichtung basierend auf der Aktualisierungsanforderungsnachricht umfasst:
Senden, durch die erste Netzwerkvorrichtung, der ersten Auslegungsanforderungsnachricht an die zweite Netzwerkvorrichtung, wenn die Aktualisierungsanforderungsnachricht gültig ist.

11. Verfahren nach einem der Ansprüche 1 bis 10, wobei das Verfahren nach dem Empfangen, durch die erste Netzwerkvorrichtung, einer Auslegungsantwortnachricht, die von der zweiten Netzwerkvorrichtung basierend auf der ersten Auslegungsanforderungsnachricht gesendet wird, ferner umfasst:
Senden (S1131), durch die erste Netzwerkvorrichtung, einer Aktualisierungsmitteilungsnachricht an die Speichervorrichtung, wobei die Aktualisierungsmitteilungsnachricht aktualisierte Informationen der ersten Netzwerkschichtinstanz trägt; und
Empfangen (S1133), durch die erste Netzwerkvorrichtung, einer Speichererfolgsmeldung, die von der Speichervorrichtung basierend auf der Aktualisierungsmitteilungsnachricht gesendet wird.

12. Vorrichtung (1800) zum Verwalten einer Netzwerkschichtinstanz, umfassend:
einen Sender-Empfänger (1820);
einen Speicher (1830), der zum Speichern einer Anweisung ausgelegt ist; und
einen Prozessor (1810), der mit dem Speicher (1830) und dem Sender-Empfänger (1820) verbunden und dafür ausgelegt ist, die im Speicher gespeicherte Anweisung auszuführen, um beim Ausführen der Anweisung die folgenden Schritte durchzuführen:
Empfangen, unter Verwendung des Sender-Empfängers (1820), einer Aktualisierungsanforderungsnachricht, die von einer Sendeseite gesendet wird, wobei die Aktualisierungsanforderungsnachricht Identifikationsinformationen einer ersten Netzwerkschichtinstanz trägt und die Aktualisierungsanforderungsnachricht für die Anforderung verwendet wird, eine erste Netzwerkfunktion der ersten Netzwerkschichtinstanz auf eine zweite Netzwerkfunktion zu aktualisieren;
Senden einer ersten Auslegungsanforderungsnachricht an eine zweite Netzwerkvorrichtung basierend auf der Aktualisierungsanforderungsnachricht, die vom Sender-Empfänger (1820) empfangen wurde, wobei die erste Auslegungsanforderungsnachricht für die Anforderung verwendet wird, die zweite Netzwerkfunktion für die erste Netzwerkschichtinstanz auszulegen;
Empfangen, unter Verwendung des Sender-Empfängers (1820), einer Auslegungsantwortnachricht, die von der zweiten Netzwerkvorrichtung basierend auf der ersten Auslegungsanforderungsnachricht gesendet wird, wobei die Auslegungsantwortnachricht verwendet wird, um anzuzeigen, dass die zweite Netzwerkfunktion ausgelegt wurde; und
Senden einer Aktualisierungsantwortnachricht an die Sendeseite, basierend auf der Auslegungsantwortnachricht, die vom Sender-Empfänger (1820) empfangen wurde, wobei die Aktualisierungsantwortnachricht verwendet wird, um anzuzeigen, dass die erste Netzwerkfunktion auf die zweite Netzwerkfunktion aktualisiert wurde;
wobei der Sender-Empfänger (1820) spezifisch für Folgendes ausgelegt ist:
vor dem Senden der ersten Auslegungsanforderungsnachricht an die zweite Netzwerkvorrichtung basierend auf der Aktualisierungsanforderungsnachricht, die vom Sender-Empfänger (1820) empfangen wurde, Senden einer Erzeugungsanforderungsnachricht an eine dritte Netzwerkvorrichtung, wenn keine verfügbare zweite Netzwerkfunktion vorhanden ist und die zweite Netzwerkfunktion eine virtualisierte Netzwerkfunktion ist, wobei die Erzeugungsanforderungsnachricht verwendet wird, um die Erzeugung der zweiten Netzwerkfunktion anzufordern, und die Erzeugungsanforderungsnachricht einen Parameter der zweiten Netzwerkfunktion trägt;
Empfangen einer ersten Antwortnachricht, die durch die dritte Netzwerkvorrichtung gesendet wird, basierend auf der Erzeugungsanforderungsnachricht, wobei die erste Antwortnachricht verwendet wird, um anzuzeigen, dass die zweite Netzwerkfunktion erzeugt wurde; und
Senden der ersten Auslegungsanforderungsnachricht an die zweite Netzwerkvorrichtung basierend auf der ersten Antwortnachricht.

13. Vorrichtung (1800) nach Anspruch 12, wobei der Prozessor (1810) spezifisch für Folgendes ausgelegt ist:
bevor die erste Auslegungsanforderungsnachricht an die zweite Netzwerkvorrichtung basierend auf der Aktualisierungsanforderungsnachricht, die vom Sender-Empfänger (1820) empfangen wurde, gesendet wird, Bestimmen, wenn die erste Netzwerkfunktion eine gemeinsam genutzte Netzwerkfunktion ist, mindestens einer zweiten Netzwerkschichtinstanz, die die erste Netzwerkfunktion mit der ersten Netzwerkschichtinstanz gemeinsam nutzt; und
der Sender-Empfänger (1820) spezifisch für Folgendes ausgelegt ist:
Senden der ersten Auslegungsanforderungsnachricht an die zweite Netzwerkvorrichtung, wenn die erste Netzwerkfunktion auf die zweite Netzwerkfunktion für alle oder einige der mindestens einen zweiten Netzwerkschichtinstanz aktualisiert werden darf, wobei die Auslegungsanforderungsnachricht ferner verwendet wird, um die Auslegung der zweiten Netzwerkfunktion für die allen oder die einigen zweiten Netzwerkschichtinstanzen anzufordern, für die die erste Netzwerkfunktion aktualisiert werden darf.

14. Vorrichtung (1800) nach Anspruch 12 oder 13, wobei der Sender-Empfänger (1820) spezifisch für Folgendes ausgelegt ist:
vor dem Senden der ersten Auslegungsanforderungsnachricht an die zweite Netzwerkvorrichtung basierend auf der Aktualisierungsanforderungsnachricht, die vom Sender-Empfänger (1820) empfangen wurde, Senden einer Modifikationsanforderungsnachricht an mindestens eine von der zweiten Netzwerkvorrichtung, der dritten Netzwerkvorrichtung und einer vierten Netzwerkvorrichtung, wenn eine dritte Netzwerkfunktion, die von der ersten Netzwerkfunktion abhängt, in der ersten Netzwerkschichtinstanz vorhanden ist, wobei die Modifikationsanforderungsnachricht verwendet wird, um eine Modifikation der dritten Netzwerkfunktion anzufordern.

## Revendications

1. Procédé pour gérer une instance de tranche de réseau, comprenant :
la réception (S 1001), par un premier dispositif de réseau, d'un message de demande de mise à jour envoyé par une extrémité de transmission, dans lequel le message de demande de mise à jour porte des informations d'identification d'une première instance de tranche de réseau, et le message de demande de mise à jour est utilisé pour demander de mettre à jour une première fonction de réseau de la première instance de tranche de réseau pour une deuxième fonction de réseau ;
l'envoi (S 1016), par le premier dispositif de réseau, d'un premier message de demande de configuration à un deuxième dispositif de réseau sur la base du message de demande de mise à jour, dans lequel le premier message de demande de configuration est utilisé pour demander de configurer la deuxième fonction de réseau pour la première instance de tranche de réseau ;
la réception (S 1017), par le premier dispositif de réseau, d'un message de réponse de configuration envoyé par le deuxième dispositif de réseau sur la base du premier message de demande de configuration, dans lequel le message de réponse de configuration est utilisé pour indiquer que la deuxième fonction de réseau a été configurée ; et
l'envoi (S1029), par le premier dispositif de réseau, d'un message de réponse de mise à jour à l'extrémité de transmission sur la base du message de réponse de configuration, dans lequel le message de réponse de mise à jour est utilisé pour indiquer que la première fonction de réseau a été mise à jour pour la deuxième fonction de réseau ;
dans lequel, avant l'envoi, par le premier dispositif de réseau, d'un premier message de demande de configuration à un deuxième dispositif de réseau sur la base du message de demande de mise à jour, le procédé comprend en outre :
l'envoi (S1012), par le premier dispositif de réseau, d'un message de demande de création à un troisième dispositif de réseau lorsqu'aucune deuxième fonction de réseau disponible n'existe et que la deuxième fonction de réseau est une fonction de réseau virtualisée, dans lequel le message de demande de création est utilisé pour demander de créer la deuxième fonction de réseau, et le message de demande de création porte un paramètre de la deuxième fonction de réseau ; et
la réception (S1015), par le premier dispositif de réseau, d'un premier message de réponse envoyé par le troisième dispositif de réseau sur la base du message de demande de création, dans lequel le premier message de réponse est utilisé pour indiquer que la deuxième fonction de réseau a été créée ; et
l'envoi, par le premier dispositif de réseau, d'un premier message de demande de configuration à un deuxième dispositif de réseau sur la base du message de demande de mise à jour comprend :
l'envoi, par le premier dispositif de réseau, du premier message de demande de configuration au deuxième dispositif de réseau sur la base du premier message de réponse.

2. Procédé selon la revendication 1, dans lequel, avant l'envoi, par le premier dispositif de réseau, d'un premier message de demande de configuration à un deuxième dispositif de réseau sur la base du message de demande de mise à jour, le procédé comprend en outre :
la détermination, par le premier dispositif de réseau, lorsque la première fonction de réseau est une fonction de réseau partagée, d'au moins une deuxième instance de tranche de réseau partageant la première fonction de réseau avec la première instance de tranche de réseau ; et
l'envoi, par le premier dispositif de réseau, d'un premier message de demande de configuration à un deuxième dispositif de réseau, sur la base du message de demande de mise à jour, comprend :
l'envoi, par le premier dispositif de réseau, du premier message de demande de configuration au deuxième dispositif de réseau, lorsque la première fonction de réseau est autorisée à être mise à jour pour la deuxième fonction de réseau pour la totalité ou certains de l'au moins une deuxième instance de tranche de réseau, dans lequel le message de demande de configuration est en outre utilisé pour demander de configurer la deuxième fonction de réseau pour la totalité ou certaines des deuxièmes instances de tranche de réseau pour lesquelles la première fonction de réseau est autorisée à être mise à jour.

3. Procédé selon la revendication 1 ou 2, dans lequel, avant l'envoi, par le premier dispositif de réseau, d'un premier message de demande de configuration à un deuxième dispositif de réseau sur la base du message de demande de mise à jour, le procédé comprend en outre :
l'envoi (S1208), par le premier dispositif de réseau, d'un message de demande de modification à au moins un du deuxième dispositif de réseau, du troisième dispositif de réseau, et d'un quatrième dispositif de réseau lorsqu'une troisième fonction de réseau dépendante de la première fonction de réseau existe dans la première instance de tranche de réseau, dans lequel le message de demande de modification est utilisé pour demander de modifier la troisième fonction de réseau.

4. Procédé selon la revendication 3, dans lequel, avant l'envoi (S1208), par le premier dispositif de réseau, d'un message de demande de modification à au moins un du deuxième dispositif de réseau, du troisième dispositif de réseau, et d'un quatrième dispositif de réseau, le procédé comprend en outre :
la détermination (S1202), par le premier dispositif de réseau, lorsque la troisième fonction de réseau est une fonction de réseau partagée, d'au moins une troisième instance de tranche de réseau partageant la troisième fonction de réseau ; et
l'envoi (S1208), par le premier dispositif de réseau, d'un message de demande de modification à au moins un du deuxième dispositif de réseau, du troisième dispositif de réseau, et d'un quatrième dispositif de réseau comprend :
l'envoi, par le premier dispositif de réseau, du message de demande de modification à au moins un du deuxième dispositif de réseau, du troisième dispositif de réseau, et du quatrième dispositif de réseau, lorsque la troisième fonction de réseau est autorisée à être modifiée pour la totalité de l'au moins une troisième instance de tranche de réseau.

5. Procédé selon l'une quelconque des revendications 1 à 4, dans lequel, avant la réception, par le premier dispositif de réseau, d'un premier message de réponse envoyé par le troisième dispositif de réseau sur la base du message de demande de création, le procédé comprend en outre :
la réception (S 1112), par le premier dispositif de réseau, d'un deuxième message de réponse envoyé par le troisième dispositif de réseau sur la base du message de demande de création, dans lequel le deuxième message de réponse est utilisé pour indiquer que la deuxième fonction de réseau est autorisée à être créée ;
l'envoi (S1113), par le premier dispositif de réseau, d'un message de demande de ressource au quatrième dispositif de réseau sur la base du deuxième message de réponse, dans lequel le message de demande de ressource est utilisé pour demander d'attribuer une ressource à la deuxième fonction de réseau ;
la réception (S1115), par le premier dispositif de réseau, d'un troisième message de réponse envoyé par le quatrième dispositif de réseau sur la base du message de demande de ressource, dans lequel le troisième message de réponse est utilisé pour indiquer que la ressource a été attribuée à la deuxième fonction de réseau ; et
l'envoi (S1116), par le premier dispositif de réseau, d'un premier message de notification au troisième dispositif de réseau, dans lequel le premier message de notification est utilisé pour informer que la ressource a été attribuée à la deuxième fonction de réseau ; et
la réception (S1118), par le premier dispositif de réseau, d'un premier message de réponse envoyé par le troisième dispositif de réseau sur la base du message de demande de création comprend :
la réception, par le premier dispositif de réseau, du premier message de réponse envoyé par le troisième dispositif de réseau sur la base du premier message de notification.

6. Procédé selon l'une quelconque des revendications 1 à 5, dans lequel, après que le premier dispositif de réseau met à jour la première fonction de réseau pour la deuxième fonction de réseau, le procédé comprend en outre :
la suppression, par le premier dispositif de réseau, de la première fonction de réseau pour la première instance de tranche de réseau.

7. Procédé selon la revendication 6, dans lequel la suppression, par le premier dispositif de réseau, de la première fonction de réseau pour la première instance de tranche de réseau comprend :
l'envoi, par le premier dispositif de réseau, d'un troisième message de demande de configuration à au moins un du deuxième dispositif de réseau, du troisième dispositif de réseau, et du quatrième dispositif de réseau si la première fonction de réseau est une fonction de réseau partagée, et la première fonction de réseau n'est pas autorisée à être mise à jour pour au moins une deuxième instance de tranche de réseau partageant la première fonction de réseau, dans lequel le troisième message de demande de configuration est utilisé pour demander de configurer que la première fonction de réseau ne fournisse plus de service pour une instance de tranche de réseau pour laquelle la première fonction de réseau est autorisée à être mise à jour ; ou
l'envoi, par le premier dispositif de réseau, d'un quatrième message de demande de configuration à au moins un du deuxième dispositif de réseau, du troisième dispositif de réseau, et du quatrième dispositif de réseau si la première fonction de réseau est une fonction de réseau virtualisée et la première fonction de réseau est générée par un cinquième dispositif de réseau, dans lequel le quatrième message de demande de configuration est utilisé pour demander de configurer que la première fonction de réseau ne fournisse plus de service pour une instance de tranche de réseau pour laquelle la première fonction de réseau est autorisée à être mise à jour.

8. Procédé selon la revendication 6, dans lequel la suppression, par le premier dispositif de réseau, de la première fonction de réseau pour la première instance de tranche de réseau comprend :
si la première fonction de réseau est une fonction de réseau virtualisée, la première fonction de réseau est une fonction de réseau partagée, la première fonction de réseau est autorisée à être mise à jour pour la totalité des deuxièmes instance de tranche de réseau partageant la première fonction de réseau, et la première fonction de réseau n'est pas générée par un gestionnaire de réseau, l'envoi (S1123), par le premier dispositif de réseau, d'un premier message de demande de terminaison au deuxième dispositif de réseau, dans lequel le premier message de demande de terminaison est utilisé pour demander de terminer la gestion de la première fonction de réseau ;
la réception (S1124), par le premier dispositif de réseau, d'un premier message d'accusé de réception de terminaison envoyé par le deuxième dispositif de réseau sur la base du premier message de demande de terminaison ;
l'envoi (S1125), par le premier dispositif de réseau, d'un second message de demande de terminaison au troisième dispositif de réseau sur la base du premier message d'accusé de réception de terminaison, dans lequel le second message de demande de terminaison est utilisé pour demander de terminer la première fonction de réseau ; et
la réception (S 1127), par le premier dispositif de réseau, d'un second message d'accusé de réception de terminaison envoyé par le troisième dispositif de réseau sur la base du second message de demande de terminaison.

9. Procédé selon l'une quelconque des revendications 1 à 8, dans lequel, avant l'envoi, par le premier dispositif de réseau, d'un premier message de demande de configuration à un deuxième dispositif de réseau sur la base du message de demande de mise à jour, le procédé comprend en outre :
l'envoi (S1006), par le premier dispositif de réseau, d'un message de demande de réservation au deuxième dispositif de réseau ou au quatrième dispositif de réseau sur la base du message de demande de mise à jour, dans lequel le message de demande de réservation est utilisé pour demander de réserver une ressource pour la deuxième fonction de réseau ; et
la réception, par le premier dispositif de réseau, d'un message de réponse de réservation envoyé par le deuxième dispositif de réseau ou le quatrième dispositif de réseau sur la base du message de demande de réservation, dans lequel le message de réponse de réservation est utilisé pour indiquer le fait que la ressource a, ou n'a pas, été réservée avec succès pour la deuxième fonction de réseau ; et
l'envoi, par le premier dispositif de réseau, d'un premier message de demande de configuration à un deuxième dispositif de réseau sur la base du message de demande de mise à jour comprend :
l'envoi, par le premier dispositif de réseau, du premier message de demande de configuration au deuxième dispositif de réseau sur la base du message de demande de mise à jour lorsque le message de réponse de réservation indique que la ressource a été réservée avec succès pour la deuxième fonction de réseau.

10. Procédé selon l'une quelconque des revendications 1 à 9, dans lequel, avant l'envoi, par le premier dispositif de réseau, d'un premier message de demande de configuration à un deuxième dispositif de réseau sur la base du message de demande de mise à jour, le procédé comprend en outre :
l'envoi (S1103), par le premier dispositif de réseau, d'un premier message de demande d'interrogation à un dispositif de stockage, dans lequel le premier message de demande d'interrogation est utilisé pour effectuer une interrogation en ce qui concerne la validité du message de demande de mise à jour, et
le premier message de demande d'interrogation porte un identifiant de l'extrémité de transmission ; et
la réception (S1104), par le premier dispositif de réseau, d'un premier message de réponse d'interrogation envoyé par le dispositif de stockage sur la base du premier message de demande d'interrogation, dans lequel le premier message de réponse d'interrogation est utilisé pour indiquer le fait que le message de demande de mise à jour est, ou n'est pas, valide ; et
l'envoi, par le premier dispositif de réseau, d'un premier message de demande de configuration à un deuxième dispositif de réseau sur la base du message de demande de mise à jour comprend :
l'envoi, par le premier dispositif de réseau, du premier message de demande de configuration au deuxième dispositif de réseau lorsque le message de demande de mise à jour est valide.

11. Procédé selon l'une quelconque des revendications 1 à 10, dans lequel, après la réception, par le premier dispositif de réseau, d'un message de réponse de configuration envoyé par le deuxième dispositif de réseau sur la base du premier message de demande de configuration, le procédé comprend en outre :
l'envoi (S1131), par le premier dispositif de réseau, d'un message de notification de mise à jour au dispositif de stockage, dans lequel le message de notification de mise à jour porte des informations mises à jour de la première instance de tranche de réseau ; et
la réception (S 1133), par le premier dispositif de réseau, d'un message de succès de stockage envoyé par le dispositif de stockage sur la base du message de notification de mise à jour.

12. Appareil (1800) pour gérer une instance de tranche de réseau, comprenant :
un émetteur-récepteur (1820) ;
une mémoire (1830), configurée pour stocker une instruction ; et
un processeur (1810), connecté à la mémoire (1830) et à l'émetteur-récepteur (1820),
et configuré pour exécuter l'instruction stockée dans la mémoire, pour réaliser les étapes suivantes lors de l'exécution de l'instruction :
la réception, en utilisant l'émetteur-récepteur (1820), d'un message de demande de mise à jour envoyé par une extrémité de transmission, dans lequel le message de demande de mise à jour porte des informations d'identification d'une première instance de tranche de réseau, et le message de demande de mise à jour est utilisé pour demander de mettre à jour une première fonction de réseau de la première instance de tranche de réseau pour une deuxième fonction de réseau ;
l'envoi d'un premier message de demande de configuration à un deuxième dispositif de réseau sur la base du message de demande de mise à jour reçu par l'émetteur-récepteur (1820), dans lequel le premier message de demande de configuration est utilisé pour demander de configurer la deuxième fonction de réseau pour la première instance de tranche de réseau ;
la réception, en utilisant l'émetteur-récepteur (1820), d'un message de réponse de configuration envoyé par le deuxième dispositif de réseau sur la base du premier message de demande de configuration, dans lequel le message de réponse de configuration est utilisé pour indiquer que la deuxième fonction de réseau a été configurée ; et
l'envoi d'un message de réponse de mise à jour à l'extrémité de transmission sur la base du message de réponse de configuration reçu par l'émetteur-récepteur (1820), dans lequel le message de réponse de mise à jour est utilisé pour indiquer que la première fonction de réseau a été mise à jour pour la deuxième fonction de réseau ;
dans lequel l'émetteur-récepteur (1820) est spécifiquement configuré pour :
avant l'envoi du premier message de demande de configuration au deuxième dispositif de réseau sur la base du message de demande de mise à jour reçu par l'émetteur-récepteur (1820), envoyer un message de demande de création à un troisième dispositif de réseau lorsqu'aucune deuxième fonction de réseau disponible n'existe et que la deuxième fonction de réseau est une fonction de réseau virtualisée, dans lequel le message de demande de création est utilisé pour demander de créer la deuxième fonction de réseau, et le message de demande de création porte un paramètre de la deuxième fonction de réseau ;
recevoir un premier message de réponse envoyé par le troisième dispositif de réseau sur la base du message de demande de création, dans lequel le premier message de réponse est utilisé pour indiquer que la deuxième fonction de réseau a été créée ; et
envoyer le premier message de demande de configuration au deuxième dispositif de réseau sur la base du premier message de réponse.

13. Appareil (1800) selon la revendication 12, dans lequel le processeur (1810) est spécifiquement configuré pour :
avant que le premier message de demande de configuration soit envoyé au deuxième dispositif de réseau sur la base du message de demande de mise à jour reçu par l'émetteur-récepteur (1820), déterminer, lorsque la première fonction de réseau est une fonction de réseau partagée, au moins une deuxième instance de tranche de réseau partageant la première fonction de réseau avec la première instance de tranche de réseau ; et
l'émetteur-récepteur (1820) est spécifiquement configuré pour :
envoyer le premier message de demande de configuration au deuxième dispositif de réseau lorsque la première fonction de réseau est autorisée à être mise à jour pour la deuxième fonction de réseau pour la totalité ou certaines de l'au moins une deuxième instance de tranche de réseau, dans lequel le message de demande de configuration est en outre utilisé pour demander de configurer la deuxième fonction de réseau pour la totalité ou certaines des deuxièmes instances de tranche de réseau pour lesquelles la première fonction de réseau est autorisée à être mise à jour.

14. Appareil (1800) selon la revendication 12 ou 13, dans lequel l'émetteur-récepteur (1820) est spécifiquement configuré pour :
avant l'envoi du premier message de demande de configuration au deuxième dispositif de réseau sur la base du message de demande de mise à jour reçu par l'émetteur-récepteur (1820), envoyer un message de demande de modification à au moins un du deuxième dispositif de réseau, du troisième dispositif de réseau, et d'un quatrième dispositif de réseau lorsqu'une troisième fonction de réseau dépendante de la première fonction de réseau existe dans la première instance de tranche de réseau, dans lequel le message de demande de modification est utilisé pour demander de modifier la troisième fonction de réseau.
